# EUROPEAN PATENT APPLICATION

(11) **EP 1 641 263 A2**
(43) Date of publication of application: **29.03.2006**
(21) Application number: 04746521.6
(22) Date of filing: 21.06.2004
(51) Int. Cl.: H04N 7/16

(54) **VIEWING CONTROL APPARATUS, VIEWING CONTROL PROGRAM, AND SECURE MODULE**

(30) Priority: 19.06.2003 JP 2003174785; 15.06.2004 JP 2004177584
(71) Applicant: MATSUSHITA ELECTRIC INDUSTRIAL CO., LTD., Osaka 5718501 (JP)
(72) Inventor: YOSHIKAWA, Masaaki, Tokyo 160-0023 (JP)
(74) Representative: Grünecker, Kinkeldey, Stockmair & Schwanhäusser Anwaltssozietät
(86) International application number: PCT/JP2004/009052
(87) International publication number: WO 2004/114051

(57) **Abstract**

Contents specified by an EMM (1021) and EMM update information (10111) for updating an expiration date are associated with an advertisement (1011), EMM (1021) is updated when the advertisement (1011) is viewed so as to allow the contents specified by EMM update information (10111) to be viewed. This ensures that a viewer views the advertisement in order to view the contents free of charge. Since an expiration date is set for viewing of the contents which is allowed by viewing the advertisement, it is necessary to view a latest advertisement so that the contents viewing time point is included within the expiration date. As a result, it is possible to ensure that the latest effective advertisement is viewed when contents are viewed.

## Description

### Technical Field

The present invention relates to a viewing control apparatus that controls viewing of broadcast contents or stored contents, viewing control program, secure module and storage medium which records contents or the like, and more particularly to allowing viewing of contents on condition of viewing an advertisement.

### Background Art

Conventionally, digital contents are delivered to users by means of broadcasting or recorded in storage media such as DVD and prices for contents are collected from users in forms of purchase cost of the storage media or broadcasting fees, from an advertiser for an advertisement attached to the contents or based on a billing scheme (pay per view: PPV) or the like applied when the contents are viewed.

In the case of charged broadcasting paid by users as a price for contents, contents are encrypted (scrambled) using an encryption key (scramble key) Ks and then broadcasted and program information (ECM: Entitlement Control Message) including information about the scramble key Ks and a program viewing condition together with the contents is encrypted using a work key Kw and then broadcasted. This scramble key Ks is updated every several seconds.

On the other hand, a reception apparatus of users who have signed a viewing contract receives a work key Kw for decrypting the ECM and individual information including information about contract terms (EMM: Entitlement Management Message) from broadcasting and this EMM is stored in an IC card inserted in the reception apparatus.

When users view broadcast contents, ECM received by the reception apparatus is decrypted by Kw and it is decided whether or not EMM contract terms satisfy the program viewing condition included in ECM. When they satisfy the condition or when program purchasing processing is performed under PPV, Ks included in ECM is decrypted using the Kw and the received contents are descrambled using this Ks.

Furthermore, when contents are delivered recorded in a storage medium, a scheme that encrypts a contents and records them in a storage medium to protect copyrights and delivers the storage medium and contents decrypting key to the contents purchaser is designed.

On the other hand, when a price for broadcast contents is collected from an advertiser, the contents are broadcasted together with an advertisement without any scrambling. A viewer who receives the contents can view the contents free of charge in exchange for viewing the advertisement.

However, there is a tendency in recent years that contents delivered by means of broadcasting are stored in a storage device first and then viewed, and therefore it is often the case that even when contents are broadcasted accompanied by an advertisement, viewers skip the advertisement and reproduce and view only contents. Such situation counteracts an effect of an advertisement using a broadcast medium.

Patent Document 1 (Unexamined Japanese Patent Publication No. 2002-157516) provides a method of delivering advertisement information designed to promote a viewing of broadcast and stored advertisements. This method allows users to rent a broadcasting reception terminal at low cost by viewing advertisements. When users reproduce and view an advertisement which has been broadcasted and stored, a history thereof is recorded in a hard disk and notified to an advertisement issuing site and a rental fee for the next month is discounted according to the time of reproducing and viewing the advertisement.

The scheme of collecting a price for broadcast contents from an advertiser of advertisement provides a merit for the advertiser in that the advertisement becomes widespread among users and also provides a merit for users that users can view the contents free of charge. However, the mode of viewing in recent years in which broadcast contents are stored once and reproduced at a desired time allows users to skip advertisements and reproduce only contents, which is likely to lessen the effects of advertisements using broadcasting, cause withdrawal of advertisers from broadcasting and make more difficult for deliberation of contents based on advertisement as described above.

Furthermore, even some measure is taken to promote viewing of stored advertisements, viewing an old advertisement broadcasted and stored in the past does not meet the advertiser's expectation.

On the other hand, the method of billing contents when they are stored or viewed requires collecting fees from individual viewers, which results in a problem of requiring the cost for collecting the fees. Furthermore, since contents are charged before they are viewed, viewers have a tendency to hesitate to purchase the contents without checking their contents, which results in a problem that substantial income cannot be expected. Furthermore, this billing method may cause companies to lose their advertising places.

### Disclosure of Invention

The present invention solves the above described conventional problems and it is an object of the present invention to provide a viewing control apparatus for allowing a viewer to view contents on condition of viewing an advertisement, viewing control program, secure module and a recording medium or the like that records the contents.

In order to attain the above described object, an aspect of the present invention is a viewing control apparatus constructed so as to store contents identification information and viewing condition information indicating a viewing expiration date of the contents in a processing module, when an advertisement associated with viewing condition update information for updating the viewing condition information is reproduced, update the viewing condition information stored in the processing module through an updating section based on the viewing condition update information, and control the reproduction of the contents based on the viewing condition information. Note that the present specification will refer to various apparatuses involved in contents viewing control such as device, secure module, time correction site, advertisement issuing site, individually or a combination thereof as a "viewing control apparatus."

Furthermore, another aspect of the present invention is a viewing control program constructed in such a way that a computer stores contents identification information and viewing condition information indicating a viewing expiration date of the contents, when an advertisement associated with viewing condition update information for updating the viewing condition information is reproduced, updates stored viewing condition information based on the viewing condition update information, and controls the reproduction of the contents based on the viewing condition information.

Furthermore, in a further aspect of the present invention, a secure module stores viewing condition information of contents indicating encrypted contents to be viewed and an expiration date until which the encrypted contents can be viewed and decrypts the encrypted contents based on the expiration date indicated by the viewing condition information to reproduce. And the secure module is configured to update the viewing condition information based on the viewing condition update information when an advertisement associated with viewing condition update information updating an expiration date of the encrypted contents indicated by the viewing condition information and to make it possible to view the encrypted contents indicated by the viewing condition update information.

### Brief Description of Drawings

FIG. 1 illustrates a configuration example of a viewing control apparatus according to a first embodiment of the present invention;
FIG. 2 illustrates a configuration example of an advertisement;
FIG. 3 illustrates a configuration example of EMM update request information;
FIG. 4 illustrates a configuration example of an EMM before a viewer views an advertisement;
FIG. 5 is a flow chart illustrating an example of advertisement reproduction operation by the viewing control apparatus;
FIG. 6 illustrates a configuration example of an EMM after a viewer views an advertisement;
FIG. 7 is a flow chart illustrating an example of encrypted contents reproduction operation by the viewing control apparatus;
FIG. 8 illustrates a configuration example of a viewing control apparatus according to a second embodiment of the present invention;
FIG. 9 is a flow chart illustrating operation of the viewing control apparatus according to the second embodiment of the present invention;
FIG. 10 illustrates a configuration example of a viewing control apparatus according to a third embodiment of the present invention;
FIG. 11 is a flow chart illustrating operation of the viewing control apparatus according to the third embodiment of the present invention;
FIG. 12 illustrates a configuration example of a viewing control apparatus according to a fourth embodiment of the present invention;
FIG. 13 is a flow chart illustrating operation of the viewing control apparatus according to the fourth embodiment of the present invention;
FIG. 14 illustrates a configuration example of a viewing control apparatus according to a fifth embodiment of the present invention;
FIG. 15 illustrates a configuration example of a viewing control apparatus according to a sixth embodiment of the present invention;
FIG. 16 illustrates a configuration example of a viewing control apparatus according to a seventh embodiment of the present invention;
FIG. 17 illustrates a configuration example of a viewing control apparatus according to an eighth embodiment of the present invention;
FIG. 18 illustrates a configuration example of a viewing control apparatus according to a ninth embodiment of the present invention;
FIG. 19 illustrates a configuration example of a viewing control apparatus according to a tenth embodiment of the present invention;
FIG. 20 illustrates a configuration example of a viewing control apparatus according to an eleventh embodiment of the present invention;
FIG. 21 illustrates a configuration example of a viewing control apparatus according to a twelfth embodiment of the present invention;
FIG. 22 illustrates a configuration example of a viewing control apparatus according to a thirteenth embodiment of the present invention;
FIG. 23 illustrates a configuration example of a viewing control apparatus according to a fourteenth embodiment of the present invention;
FIG. 24 illustrates a configuration example of a viewing control apparatus according to a fifteenth embodiment of the present invention;
FIG. 25 illustrates a configuration example of a viewing control apparatus according to a sixteenth embodiment of the present invention;
FIG. 26 illustrates a configuration example of a viewing control apparatus according to a seventeenth embodiment of the present invention; and
FIG. 27 illustrates a configuration example of a viewing control apparatus according to an eighteenth embodiment of the present invention.

### Best Mode for Carrying out the Invention

With reference now to the accompanying drawings, embodiments of the present invention will be explained below. The present invention is by no means limited by these embodiments and can be implemented in various modes without departing from the essence thereof.

### (Embodiment 1)

A first embodiment of the present invention will explain the basic configuration of a viewing control apparatus that allows viewing of contents when an advertisement is viewed.

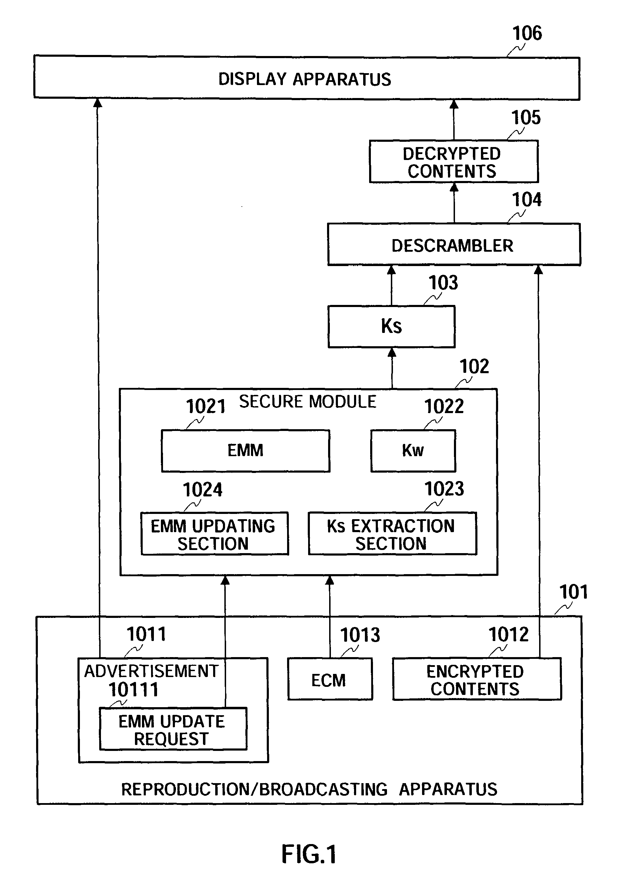

As shown in a block diagram in FIG. 1, this apparatus is provided with reproduction/broadcasting apparatus 101 that outputs advertisement 1011, scrambled encrypted contents 1012 and ECM 1013 encrypted using a key Kw, secure module 102 that extracts a key Ks 103 from ECM 1013 using stored key Kw 1022, descrambler 104 that decrypts encrypted contents 1012 using key Ks 103 and outputs decrypted contents 105 and display apparatus 106 that displays advertisement 1011 and decrypted contents 105.

Reproduction/broadcasting apparatus 101 is a broadcasting apparatus that generates advertisement 1011, encrypted contents 1012 and ECM 1013 and broadcasts and transmits them by radio or a wire circuit. Reproduction/broadcasting apparatus 101 also is a reproduction apparatus that stores, reproduces and outputs advertisement 1011, encrypted contents 1012 and ECM 1013 received from this broadcasting apparatus. This advertisement 1011 includes EMM update request 10111 that specifies target contents and an expiration date for until which viewing the contents is allowed and this EMM update request 10111 is encrypted using key Kw 1022. Furthermore, ECM 1013 includes information about key Ks 103 for descrambling contents and viewing enabled condition, and they are encrypted using key Kw 1022.

Secure module 102 is mounted or incorporated in a reception apparatus and descrambler 104 forms a part of the reception apparatus. This secure module 102 stores EMM 1021 indicating contents viewing condition and key Kw 1022 for decrypting EMM update request 10111 and ECM 1013. This EMM 1021 and key Kw 1022 are broadcasted beforehand and stored in the secure module 102 as in the case of the conventional system.

Secure module 102 is further provided with EMM updating section 1024 that decrypts EMM update request 10111 upon reception of EMM update request 10111 using key Kw 1022 and sets information about EMM update request 10111 (that is, contents specified by EMM update request 10111 and information about the expiration date for until which viewing of the contents is allowed) in EMM 1021, and also provided with Ks extraction section 1023 that decrypts ECM 1013 using key Kw 1022, identifies the contents described therein, compares the expiration date until which viewing of the contents is allowed set in EMM 1021 with the current time and extracts key Ks 103 from ECM 1013 when viewing is possible.

This secure module 102 is a so-called CAS card (card intended for conditional access) or IC card and is created with a medium which prevents unauthorized reading and writing of data from outside and which is destroyed when unauthorized access is made.

Note that EMM update request 10111 specifies an advertisement broadcasting time or a certain time from the advertisement stored time as an expiration date until which viewing the contents is allowed. The end time of the expiration date may be specified concretely or a certain time from a current time may be set as an expiration date.

The operation of this viewing control apparatus will be explained. First, reproduction/broadcasting apparatus 101 reproduces or broadcasts advertisement 1011 including EMM update request 10111 and encrypted contents 1012. The advertisement 1011 and encrypted contents 1012 are not necessarily reproduced or broadcasted simultaneously. When encrypted contents 1012 are reproduced or broadcasted, ECM 1013 synchronized therewith is reproduced or broadcasted. The reproduced or broadcasted advertisement 1011 is displayed on display apparatus 106.

EMM 1021 in secure module 102 initially sets all contents unavailable. Upon receiving EMM update request 10111 included in the displayed advertisement 1011, EMM updating section 1024 of secure module 102 decrypts the request using key Kw 1022 and sets the contents specified by EMM update request EMM 10111 and an expiration date until which viewing of the contents is allowed in EMM 1021.

Next, upon reception of ECM 1013, Ks extraction section 1023 decrypts ECM 1013 using key Kw 1022, identifies the contents described therein, compares the expiration date until which viewing of the contents is allowed set in EMM 1021 with the current time, extracts key Ks 103 from ECM 1013 and sends it out from secure module 102 when viewing is possible.

Descrambler 104 receives encrypted contents 1012 and key Ks 103, decrypts the encrypted contents 1012 using key Ks 103 and sends decrypted contents 105. These decrypted contents 105 are displayed on display apparatus 106.

The viewing control by this viewing control apparatus enables viewing of the contents only when advertisement 1011 including EMM update request 10111 of the contents is viewed and the contents viewing time point falls within the expiration date specified by EMM update request 10111.

EMM update request 10111 for contents can be included not only in advertisement 1011 broadcasted with the contents but also in advertisement 1011 broadcasted after the contents. In this case, viewing the recently broadcasted or stored advertisement satisfies the viewing condition and it is possible for viewers to reproduce or view the contents.

Next, the detailed operation of the viewing control apparatus that makes it possible to see the encrypted contents when an advertisement is viewed will be explained.

The viewing control apparatus stores encrypted contents 1012 encrypted using key Ks 103, advertisement 1011, key Kw 1022 for decrypting ECM 1013 and ECM 1013 in reproduction/broadcasting apparatus 101. Encrypted contents 1012, advertisement 1011, key Kw 1022 and ECM 1013 may also be acquired via a network or broadcasting, or via a recording medium such as an SD card or DVD. A method of acquiring them is not particularly limited in the present invention.

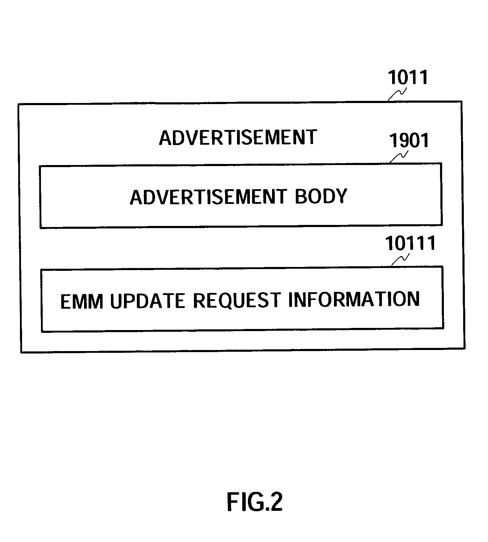

FIG. 2 illustrates an example of the structure of advertisement 1011.

Advertisement 1011 consists of advertisement body 1901 and EMM update request information 10111. EMM update request information 10111 is encrypted using key Kw 1022 to prevent it from being rewritten by a third party.

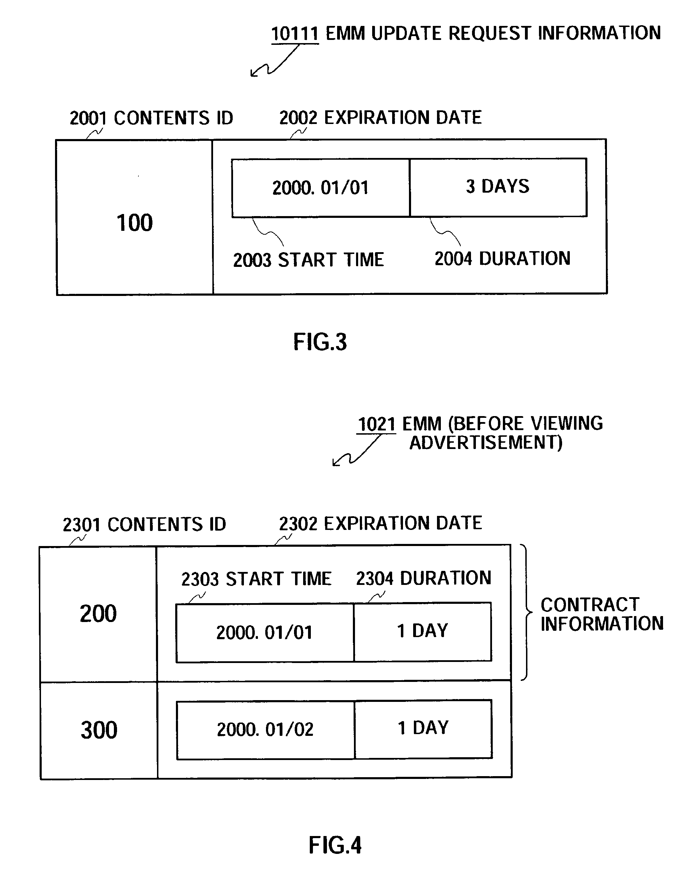

FIG. 3 illustrates an example of the structure of EMM update request information 10111.

EMM update request information 10111 stores contract information and is made up of contents ID 2001 for identifying encrypted contents and information 2002 indicating an expiration date until which the contents ID 2001 can be viewed as the content information. The expiration date consists of start time 2003 indicating a start time that authorizes viewing the encrypted contents represented by the contents ID and duration 2004 that relatively indicates the expiration date of the viewing authorization. Since start time 2003 and duration 2004 are based on the intent of an advertisement sponsor and are preset at a center. The contents of EMM update request information 10111 are the same as those of an EMM used in current digital broadcasting or the like. In the case of EMM update request information 10111 shown in FIG. 3, contents ID 2001 represents contents "100", start time 2003 represents "2000.01/01" and duration 2004 represents "3 days."

Next, the contents of ECM 1013 will be explained. The contents of ECM 1013 are the same as those of an ECM used in current digital broadcasting or the like and consist of contents ID 2001 for identifying encrypted contents and key Ks 103 with which the contents are encrypted.

Next, the contents of EMM 1021 will be explained. The contents of EMM 1021 are the same as those of an EMM used in current digital broadcasting or the like and consist of a list of contract information, and the contract information consists of contents ID 2001 for identifying encrypted contents that can be decrypted and an expiration date until which encrypted contents can be decrypted.

The advertisement reproduction operation of the viewing control apparatus when a viewer views an advertisement and the encrypted contents reproduction operation of the viewing control apparatus when the viewer views encrypted contents will be explained.

FIG. 4 illustrates a configuration example of EMM 1021 before the viewer views an advertisement.

Before the advertisement is viewed, the viewing control apparatus allows viewing of encrypted contents 1012 having a contents ID 2301 of "200" for 1 day from January 1, 2000 and allows viewing of encrypted contents 1012 having a contents ID 2301 of "300" for 1 day from January 2, 2000 but does not allow viewing of other encrypted contents 1012.

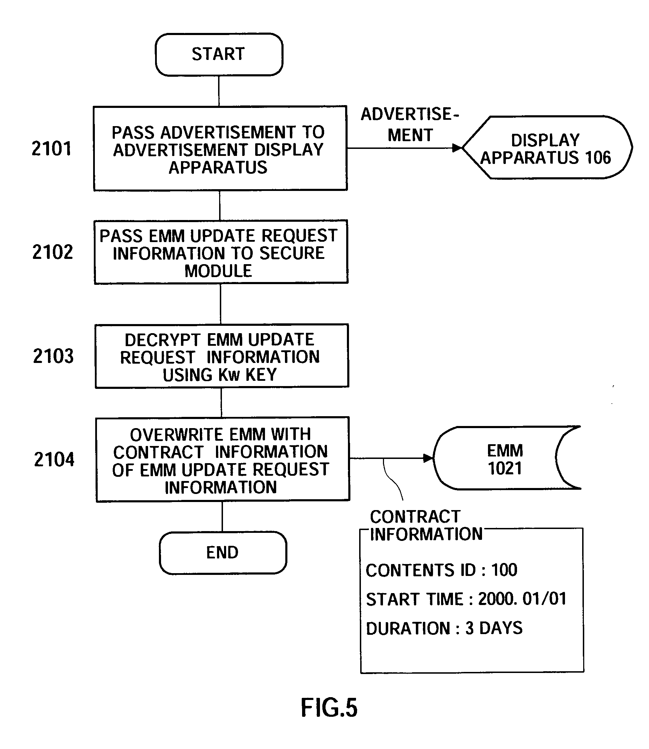

The advertisement reproduction operation of the viewing control apparatus when the viewer views an advertisement on January 1, 2000 under such a circumstance will be explained with reference to a flow chart in FIG. 5.

Reproduction/broadcasting apparatus 101 passes advertisement 1011 to display apparatus 106. In this way, advertisement 1011 is reproduced and the viewer views the advertisement (step 2101).

Next, reproduction/broadcasting apparatus 101 passes EMM update request information 10111 included in advertisement 1011 to secure module 102 (step 2102). EMM updating section 1024 of secure module 102 decrypts EMM update request information 10111 using key Kw 1022 (step 2103) .

EMM updating section 1024 writes contract information about EMM update request information 10111; contract information of EMM 1021 with contents ID 2001 of "100", start time 2003 of "January 1, 2000" and duration 2004 of "3 days" shown in FIG. 3 in this example (step 2104) .

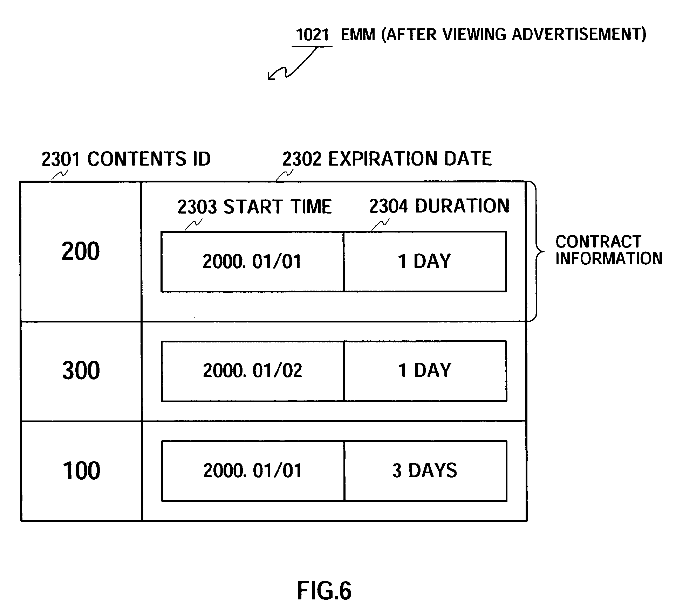

FIG. 6 illustrates a state of EMM 1021 after the viewer views the advertisement.

According to EMM 1021 updated by EMM updating section 1024 based on EMM update request information 1011, after the advertisement is viewed, the viewing control apparatus allows viewing of encrypted contents 1012 having contents ID 2301 of "100" for 3 days from January 1, 2000 in addition to encrypted contents 1012 having contents ID 2301 of "200" and "300" as shown in FIG. 4.

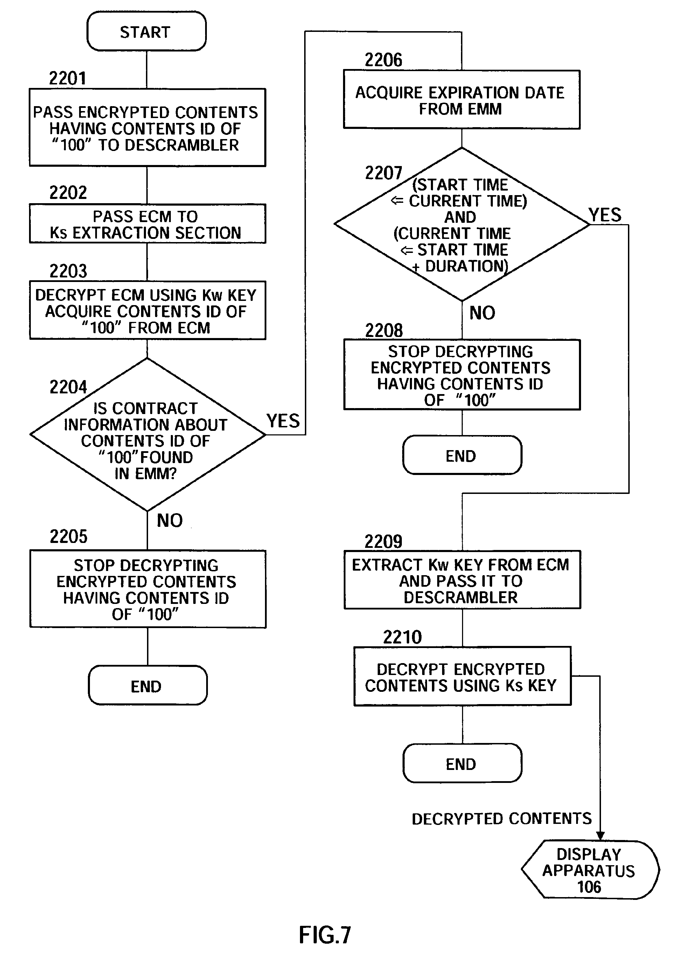

Next, the encrypted contents reproduction operation of the viewing control apparatus when the viewer views the encrypted contents having contents ID 2301 of "100" on January 2, 2000, the day after the viewer viewed the advertisement will be explained using a flow chart in FIG. 7.

Reproduction/broadcasting apparatus 101 passes encrypted contents 1012 having contents ID 2301 of "100" to descrambler 104 (step 2201).

Reproduction/broadcasting apparatus 101 passes ECM 1013 to Ks extraction section 1023 of secure module 102 (step 2202). Ks extraction section 1023 decrypts ECM 1013 using key Kw 1022 and acquires contents ID 2301 described in ECM 1013. In this example, contents ID 2301 of "100" is acquired (step 2203).

Ks extraction section 1023 checks whether or not contract information about contents ID 2301 of "100" is set in EMM 1021 (step 2204). When there is no contract information, decryption of the encrypted contents is suspended (step 2205).

Here, if the contract information is found, expiration date 2302 is acquired as the contract information from EMM 1021 shown in FIG. 6 (step 2206). Ks extraction section 1023 also checks whether or not the current time is between start time 2303 of expiration date 2302 and (start time 2303 + duration 2304) (step 2207).

When the current time is not found between start time 2303 and (start time 2303 + duration 2304), decryption of encrypted contents 1012 having the contents ID 2301 of "100" is suspended (step 2208).

In this example, the current time is January 2, 2000, start time 2303 is January 1, 2000 and the (start time 2303 + duration 2304) is January 4, 2000, and the current time is found between the two, and therefore the processing continues. When the current time is found between start time 2303 and (start time 2303 + duration 2304), Ks extraction section 1023 extracts key Ks 103 from ECM 1013 and sends it out to descrambler 104 (step 2209). When descrambler 104 acquires key Ks 103, it decrypts the encrypted contents 1012 using key Ks 103 and passes it to display apparatus 106 (step 2210).

Note that though this embodiment illustrates the example using the digital broadcasting CAS technology (ECM, EMM) but the present invention is not limited to a CAS application of digital broadcasting and generally applicable to a contents delivery system having a system transmitting contract information, a system controlling it within a reception apparatus (equivalent to EMM) and a system transmitting key information and a system controlling it within the reception apparatus (equivalent to ECM).

Furthermore, this embodiment shows an example using the secure module, which is intended to prevent tampering of EMM information and key Kw or the like, and it is also possible to prevent tampering information about viewing control using a different system and the secure module is not the essential condition to the configuration.

Furthermore, this embodiment shows an example of using secure module 102 as a processing module for storing or updating viewing conditions such as EMM, but a nonsecure processing module can also be used.

Furthermore, this embodiment explains on the assumption that advertisements and contents are images, but advertisements and contents can be a mixture with audio or other data or only audio data. In such a case, a display apparatus can be any device that is capable of expressing advertisements and contents in their formats.

Note that it is also possible to calculate an expiration date for viewing contents using an arbitrary time point between an advertisement viewing start time and advertisement viewing end time or an advertisement acquisition time as a reference time.

Thus, prior to viewing of contents, this viewing control apparatus is capable of showing not an accumulated and stored old advertisement but an advertisement effective at the time of viewing. Consequently, an advertiser can acquire means for effectively showing a new advertisement of merchandise or the like, while a viewer can view contents free of charge by viewing the advertisement. Furthermore, a contents provider can earn advertisement revenue from contents broadcasted in the past.

### (Second embodiment)

A second embodiment of the present invention will explain a viewing control apparatus that allows viewing of contents when an advertisement is viewed from its beginning to end.

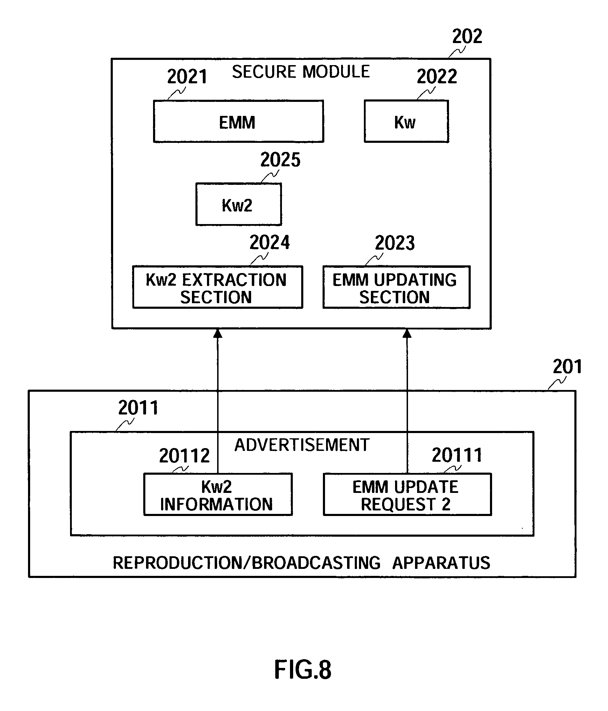

As shown in FIG. 8, in this apparatus, an end of advertisement 2011 sent out from reproduction/broadcasting apparatus 201 includes EMM update request encrypted using key Kw 2022 that is further encrypted using key Kw2 (2025), and a beginning of advertisement 2011 includes kw2 information 20112 that is key Kw2 (2025) encrypted using key Kw 2022. The information content of EMM update request 2 (20111) is the same as EMM update request 10111 in the first embodiment and describes target contents and the expiration date until which viewing of the contents is allowed.

On the other hand, secure module 202 is provided with Kw2 extraction section 2024 that decrypts Kw2 information 20112 using key Kw 2022 and extracts key Kw2 (2025) and EMM updating section 2023 that decrypts EMM update request 2 (20111) using key Kw2 (2025), further decrypts the information using key Kw 2022 and sets information about EMM update request 2 (20111) obtained in EMM 2021. The rest of the configuration is the same as that of the first embodiment (FIG. 1) (in FIG. 8, some parts such as a display apparatus 106 and descrambler 104 are omitted).

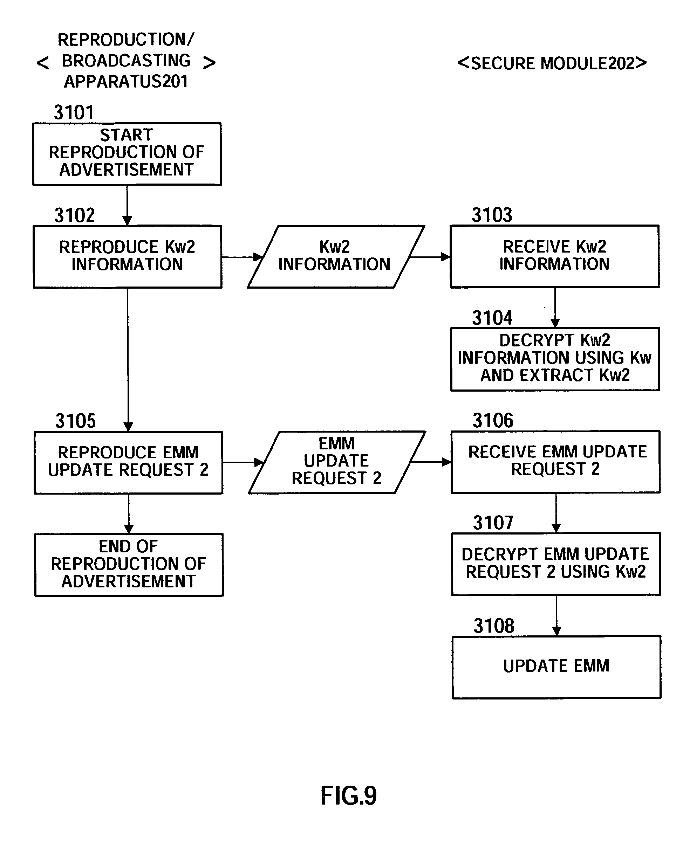

The operation of this viewing control apparatus will be explained with reference to FIG. 9.

First, reproduction/broadcasting apparatus 201 reproduces or broadcasts advertisement 2011 including EMM update request 2 (20111) and Kw2 information 20112 and advertisement 2011 is displayed on display apparatus 106 (step 3101). Kw2 information 20112 is reproduced or broadcasted at the beginning of an advertisement (step 3102) and upon reception of Kw2 information 20112, Kw2 extraction section 2024 decrypts Kw2 information 20112 using key Kw 2022 (step 3103) and extracts key Kw2 (2025) (step 3104).

Next, EMM update request 2 (20111) is reproduced or broadcasted at the end of the advertisement (step 3105), and upon reception of EMM update request 2 (20111) (step 3106), EMM updating section 2023 decrypts this using key Kw2 (2025) (step 3107), decrypts the information using key Kw 2022 and sets information that enables viewing the contents specified by EMM update request 2 (20111) until the expiration date in EMM 2021 (step 3108).

Then, the display of the contents is controlled based on the information set in EMM 2021 as in the case of the first embodiment.

In this way, this viewing control apparatus does not allow viewing of contents without viewing the beginning and end of an advertisement, and can thereby ensure that the advertisement is viewed.

### (Third embodiment)

A third embodiment will explain a viewing control apparatus that allows viewing of contents when an advertisement is viewed from beginning to end without fast forwarding.

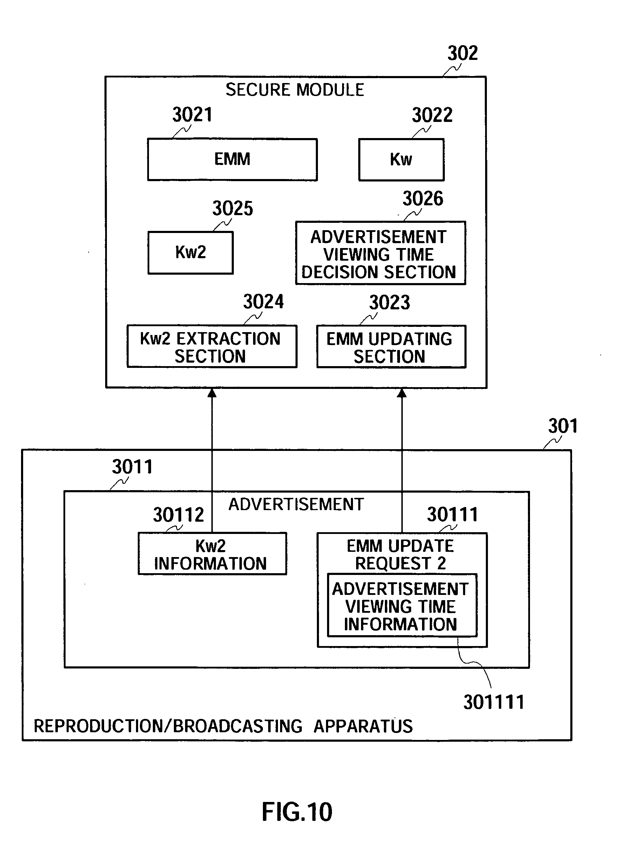

This apparatus, as shown in FIG. 10, includes EMM update request 2 (30111) having advertisement viewing time information 301111 indicating a viewing time of advertisement 3011.

On the other hand, secure module 302 is provided with advertisement viewing time decision section 3026 that measures a time from after Kw2 information 30112 is received until EMM update request 2 (30111) is received and deletes the contents viewing information set in EMM 3021 when the measured time is different from advertisement viewing time information 301111. The rest of the configuration is the same as that of the second embodiment (FIG. 8).

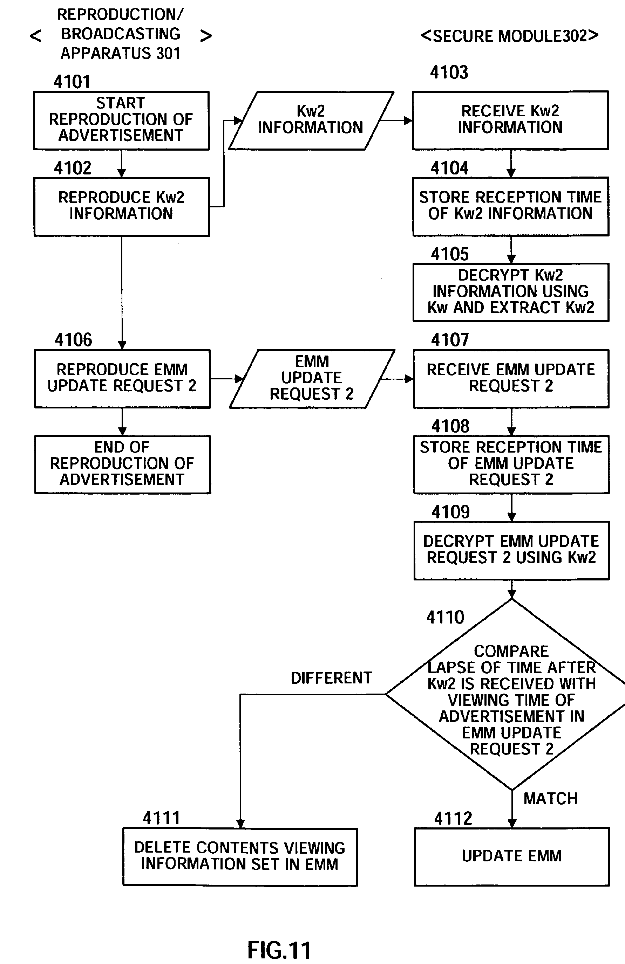

The operation of this viewing control apparatus will be explained with reference to FIG. 11.

First, reproduction/broadcasting apparatus 301 reproduces or broadcasts advertisement 3011 including EMM update request 2 (30111) and Kw2 information 30112 and the advertisement is displayed (step 4101) . EMM update request 2 (30111) includes advertisement viewing time information 301111 on a viewing time of the advertisement.

Kw2 information 30112 is reproduced or broadcasted at the beginning of an advertisement (step 4102) and upon reception of Kw2 information 30112 (step 4103), Kw2 extraction section 3024 decrypts Kw2 information 30112 using key Kw 3022 and extracts key Kw2 (3025) (step 4105). Advertisement viewing time decision section 3026 stores the reception time of Kw2 information 30112 (step 4104).

Next, EMM update request 2 (30111) is reproduced or broadcasted at the end of the advertisement (step 4106), and upon reception of EMM update request 2 (30111) (step 4107), EMM updating section 2 (3023) decrypts EMM update request 2 (30111) using key Kw 2 (3025) (step 4109), further decrypts the information using key Kw 3022 and sets information that the contents specified by EMM update request 2 (30111) can be viewed until the expiration date in EMM 3021. Advertisement viewing time decision section 3026 stores the reception time of EMM update request 2 (30111) (step 4108).

Next, advertisement viewing time decision section 3026 measures the time after Kw 2 information 30112 is received until EMM update request 2 (30111) is received, compares the measured time with the advertisement viewing time information 301111 (step 4110), deletes viewing information of the contents set in EMM 3021 when the two are different (step 4111) and sets information that the contents specified by EMM update request 2 (30111) can be viewed until the expiration date in EMM 3021 when the two match as in the case of the second embodiment (step 4112).

Then, the display of the contents is controlled based on the information set in EMM 3021 as in the case of the first embodiment.

In this way, this viewing control apparatus measures the time interval between the beginning time and the ending time of viewing the advertisement and can thereby prevent fast forwarding or the like of the advertisement.

### (Fourth embodiment)

A fourth embodiment of the present invention will explain a viewing control apparatus that sets check points not only at the beginning and end of an advertisement but also at some midpoints of the advertisement at certain time intervals, verifies that the time intervals between check points are viewed without fast forwarding and then allows viewing of the contents.

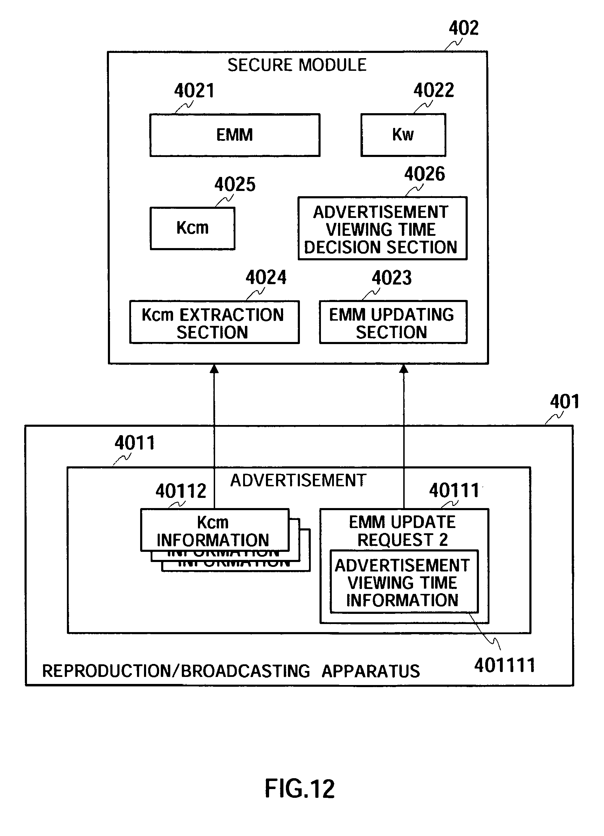

As shown in FIG. 12, in this apparatus, an advertisement 4011 sent out from a reproduction/broadcasting apparatus 401 includes key information Kcm 40112 issued at each check point and an EMM update request 2 (40111) issued at the end of the advertisement 4011. Key information Kcm 40112 is information obtained by encrypting different keys Kcm 4025 set at respective check points and issued at certain intervals during viewing of the advertisement. Key information Kcm 40112 issued at the beginning is information obtained by encrypting key Kc1 set at the first check point using key Kw 4022 and key information Kcm 40112 issued next is information obtained by encrypting key Kc2 set at the next check point using key Kc1 set at the previous check point. Key Kcm set at check points are encrypted using another key Kcm set at its immediately preceding check point and issued as key information Kcm 40112 one after another.

In addition, EMM update request 2 (40111) is encrypted using key Kw 4022 and then further encrypted using key Kcm 4025 set at the last check point. This EMM update request 2 (40111) describes target contents and a duration during which viewing of the contents is allowed and further describes advertisement viewing time information 401111 indicating issuance time intervals of respective parts of Kcm information 40112.

On the other hand, secure module 402 is provided with Kcm extraction section 4024, EMM updating section 4023 and advertisement viewing time decision section 4026. Kcm extraction section 4024 decrypts initially issued part of Kcm information 40112 using Key Kw 4022, extracts key Kcm 4025, decrypts second and subsequently issued part of Kcm information 40112 using Kcm 4025 extracted from the immediately preceding part of Kcm information 40112 and extracts key Kcm 4025. EMM updating section 4023 decrypts, upon reception of EMM update request 2 (40111), EMM update request 2 (40111) using key Kcm 4025 extracted last by Kcm extraction section 4024, further decrypts the information using key Kw 4022 and sets the contents specified by EMM update request 2 (40111) and duration during which viewing of the contents is allowed in EMM 4021. Advertisement viewing time decision section 4026 measures a time between check points after Kcm information 40112 is received until EMM update request 2 (40111) is received and deletes contents viewing information set in EMM 4021 when the measured time is different from advertisement viewing time information 401111. The rest of the configuration is the same as that of the second embodiment (FIG. 8).

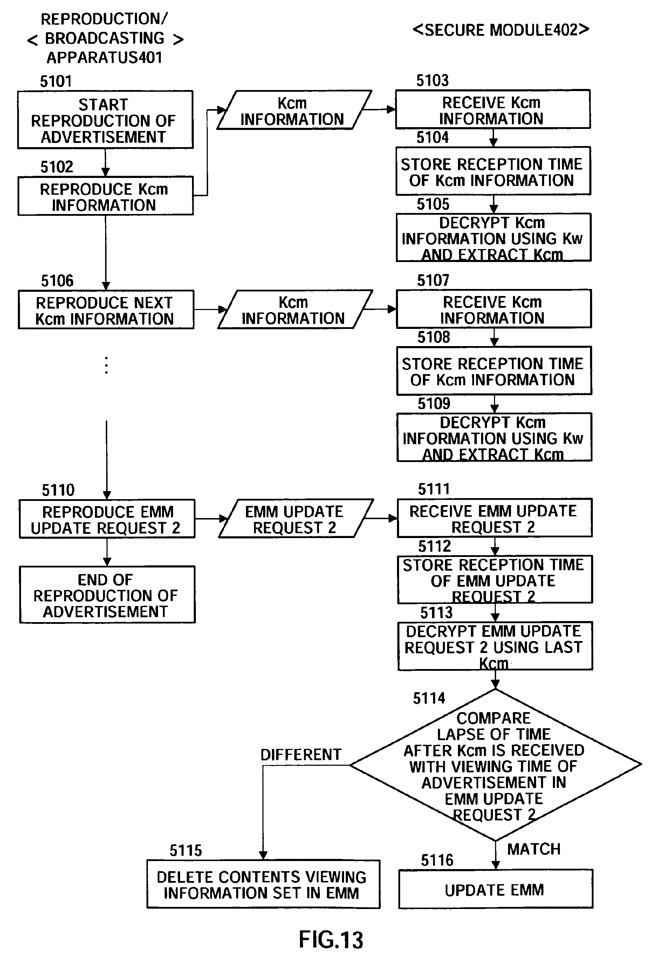

The operation of this viewing control apparatus will be explained with reference to FIG. 13.

First, reproduction/broadcasting apparatus 401 reproduces or broadcasts advertisement 4011 including EMM update request 2 (40111) and Kcm information 40112 and displays advertisement 4011 (step 5101). EMM update request 2 (40111) includes advertisement viewing time information 401111 on the viewing time of the advertisement.

Kcm information 40112 is sequentially sent out during reproduction or broadcasting of the advertisement (step 5102), and upon reception of Kcm information 40112 (step 5103), Kcm extraction section 4024 decrypts the initially issued part of Kcm information 40112 using key Kw 4022 and extracts key Kcm 4025 (step 5105). In that case, advertisement viewing time decision section 4026 stores the reception time of Kcm information 40112 (step 5104).

Likewise, when the second and subsequent issued parts of Kcm information 40112 are sequentially sent out during reproduction or broadcasting of the advertisement (step 5106) and received by Kcm extraction section 4024 (step 5107), the information is decrypted using key Kcm 4025 extracted from the immediately preceding Kcm information and key Kcm 4025 is sequentially extracted (step 5109). In that case, advertisement viewing time decision section 4026 stores the times at which the second and subsequent issued parts of Kcm information 40112 are received (step 5108). When the issuance interval of Kcm information 40112 is different from the issuance interval set in advertisement viewing time information 401111, advertisement viewing time decision section 4026 deletes key Kcm 4025 so as to prevent subsequent keys Kcm 4025 or EMM update request 2 (40111) from being decrypted.

Next, when EMM update request 2 (40111) is reproduced or broadcasted at the end of the advertisement (step 5110), EMM updating section 2 (4023) receives EMM update request 2 (40111) (step 5111), decrypts EMM update request 2 (40111) using key Kcm 4025 extracted last by Kcm extraction section 4024 (step 5113), further decrypts the information using key Kw 4022 and sets the contents described in EMM update request 2 (40111) and expiration date until which viewing of the contents is allowed in EMM 4021. Note advertisement viewing time decision section 4026 stores the time at which EMM update request 2 (40111) is received (step 5112).

Next, advertisement viewing time decision section 4026 measures the time after Kcm information 40112 is received until EMM update request 2 (40111) is received, compares the measured time with advertisement viewing time information 401111 (step 5114), when they are different, deletes the contents viewing information set in EMM 4021 (step 5115) and, when the two match, sets information that the contents specified by EMM update request 2 (40111) can be viewed until the expiration date in EMM 4021 as in the case of the second embodiment (step 5116).

Thereafter, like the case of the first embodiment, the display of the contents is controlled based on the information set in EMM 4021.

Thus, this viewing control apparatus does not allow key for viewing contents to be obtained unless all of the plurality of points in the advertisement are viewed without carrying out fast forwarding or the like. Therefore, it is possible to reliably prevent fast forwarding or the like of the advertisement and ensure that the advertisement is viewed.

### (Fifth embodiment)

A fifth embodiment will explain a viewing control apparatus that prevents the time of a secure module from being illegally changed.

The present invention sets an expiration date until which viewing of the contents is allowed by viewing the advertisement, but implementing this system requires the precise time of the secure module for controlling the expiration date. The time of the secure module is conventionally constructed so as to be corrected by acquiring time information from the outside, for example, once a day when power is turned on, but there is a possibility that the time of the secure module may be illegally changed or manipulated by intentionally giving wrong information at the time of this correction. The viewing control apparatus in this embodiment will prevent such illegal manipulation.

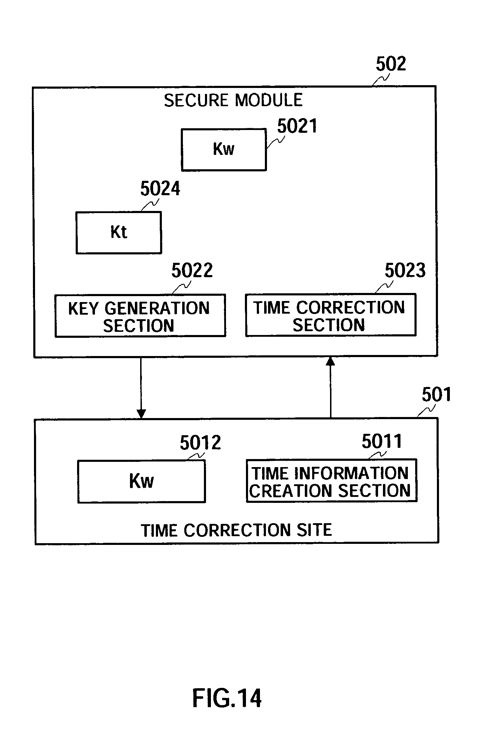

As shown in FIG. 14, this apparatus is provided with time correction site 501 that transmits time information and secure module 502 that receives the time information from time correction site 501 and corrects information about the stored current time. Time correction site 501 stores key Kw 5012 and is provided with time information creation section 5011 that encrypts the time information using key Kt 5024 sent from secure module 502 and sends it.

On the other hand, secure module 502 is provided with key generation section 5022 that stores key Kw 5021 and generates key Kt 5024 for encrypting time information randomly and time correction section 5023 that decrypts time information received from time correction site 501 and corrects the time of secure module 502.

The operation of this viewing control apparatus will be explained. First, when correcting the current time inside the secure module, key generation section 5022 generates key Kt 5024 randomly, encrypts the key using key Kw 5021 and sends it to time correction site 501.

Next, upon reception of the encrypted key Kt 5024, time information creation section 5011 of time correction site 501 decrypts it using key Kw 5021, encrypts the current time of time correction site 501 using key Kt 5024 obtained by decryption and sends it to secure module 502.

Next, time correction section 5023 of secure module 502 decrypts the received time information using key Kt 5024 and corrects the time of the secure module.

In this way, this viewing control apparatus does not allow the time of the secure module to be illegally changed, and can thereby accurately control a contents viewing expiration date and ensures that an effective advertisement is shown when contents are viewed.

### (Sixth embodiment)

A sixth embodiment of the present invention will explain a viewing control apparatus capable of arbitrarily selecting a method of viewing contents free of charge by seeing an advertisement or a method of viewing contents on a charged basis through PPV.

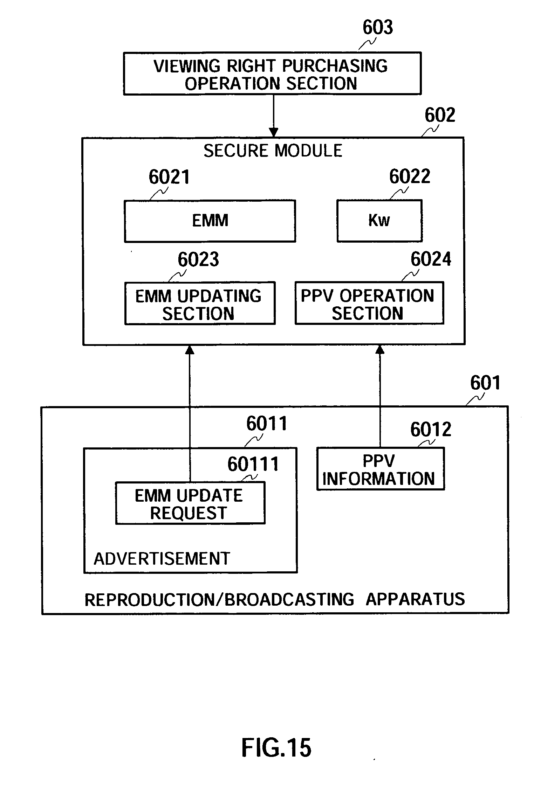

As shown in FIG. 15, in this apparatus, reproduction/broadcasting apparatus 601 sends advertisement 6011 including EMM update request 60111 and PPV information 6012 obtained by encrypting information about an amount of money necessary to purchase a contents viewing right and expiration date of purchasing the contents viewing right or the like using key Kw 6022. On the other hand, the reception apparatus is provided with viewing right purchasing operation section 603 that carries out operation of purchasing the contents viewing right and secure module 602 is provided with not only EMM 6021, key Kw 6022 and EMM updating section 6023 but also PPV operation section 6024 that sets information that the contents viewing right has been purchased in EMM 6021 when an operation of purchasing the contents viewing right specified by PPV information 6012 within the specified expiration date is carried out by viewing right purchasing operation section 603. Upon reception of EMM update request 60111, EMM updating section 6023 decrypts it using key Kw 6022 and sets the contents described in EMM update request 60111 and expiration date until which viewing of the contents is allowed in EMM 6021, but EMM updating section 6023 does not perform this processing when information that the contents viewing right has been purchased is set in EMM 6021. The rest of the configuration is the same as that in the first embodiment (FIG. 1).

The operation of this viewing control apparatus will be explained. First, reproduction/broadcasting apparatus 601 reproduces or broadcasts advertisement 6011 including EMM update request 60111 and PPV information 6012.

When an operation of purchasing the contents viewing right is carried out by viewing right purchasing operation section 603, PPV operation section 6024 of secure module 602 receives PPV information 6012 on the purchase of the contents viewing right, decrypts the information using key Kw 6022 and sets information that the contents viewing right has been purchased in EMM 6021 when the current time is included within the expiration date of purchasing of the viewing right specified by PPV information 6012.

Upon reception of EMM update request 60111, EMM updating section 6023 decrypts it using key Kw 6022 and discards EMM update request 60111 when EMM update request 60111 is associated with the contents for which information that the contents viewing right has been purchased is set in EMM 6021. In other cases, EMM updating section 6023 sets the contents specified by EMM update request 60111 and information about the expiration date until which viewing of the contents is allowed in EMM 6021.

Thereafter, as in the case of the first embodiment, the display of the contents is controlled based on the information set in EMM 6021.

In this way, this viewing control apparatus allows the viewer to purchase a viewing right to view contents instead of viewing an advertisement. In this case, by specifying an expiration date of purchasing the viewing right, it is possible to purchase the viewing right with the amount of money for purchasing the viewing right set in the latest PPV information.

### (Seventh embodiment)

A seventh embodiment of the present invention will explain a viewing control apparatus capable of acquiring information about an advertisement necessary to view contents in advance.

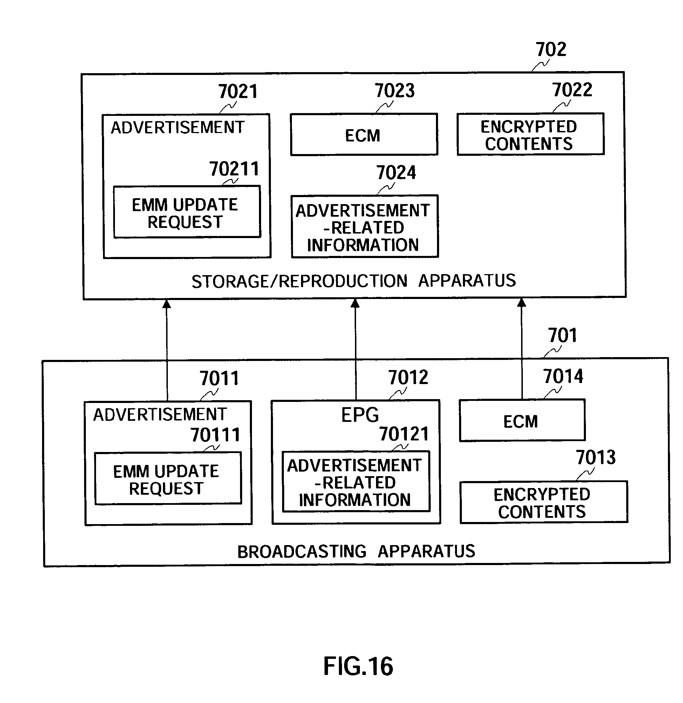

As shown in FIG. 16, in this apparatus, broadcasting apparatus 701 that broadcasts contents broadcasts EPG 7012 describing program information of contents in advance and then broadcasts advertisement 7011 including EMM update request 70111, scrambled encrypted contents 7013 and ECM 7014 obtained by encrypting a contents scramble key and a viewing condition. This EPG 7012 includes advertisement-related information 70121 describing list information of contents on advertisements necessary to view the contents (including advertisement insertion points in contents and correspondence with advertisements to be viewed at the respective points), information about an expiration date until which viewing of the contents is allowed and site information in which the updated information is described when such information is updated.

Storage/reproduction apparatus 702 that stores and reproduces contents to be broadcasted extracts advertisement-related information 7024 from the received EPG 7012 and stores it and also stores advertisement 7021 including received EMM update request 70211, encrypted contents 7022 and ECM 7023.

The operation of this viewing control apparatus will be explained. First, broadcasting apparatus 701 broadcasts EPG 7012 and storage/reproduction apparatus 702 stores the advertisement-related information 7024 extracted from EPG 7012 of the contents to be stored.

Next, broadcasting apparatus 701 broadcasts the advertisement 7011, encrypted contents 7013 and ECM 7014 and the storage/reproduction apparatus 702 receives them and stores the advertisement 7021, encrypted contents 7022 and ECM 7023.

This storage/reproduction apparatus 702 functions as reproduction/broadcasting apparatus 101 in the first embodiment (FIG. 1) and outputs stored advertisement 7021, encrypted contents 7022 and ECM 7023 when contents are reproduced. Furthermore, when the expiration date is past and viewing of the contents is no longer allowed with the stored advertisement, it is possible to acquire information about the latest advertisement necessary to view the contents from the site described in advertisement-related information 7024 and receive the advertisement by means of broadcasting.

Thus, this viewing control apparatus can acquire information about an advertisement necessary to view contents in advance and obtain, even when the information about the advertisement is updated, information for acquiring the latest advertisement.

### (Eighth embodiment)

An eighth embodiment of the present invention will explain a viewing control apparatus that acquires, before contents stored in the past or contents delivered with media such as DVD are viewed, an advertisement necessary to view the contents.

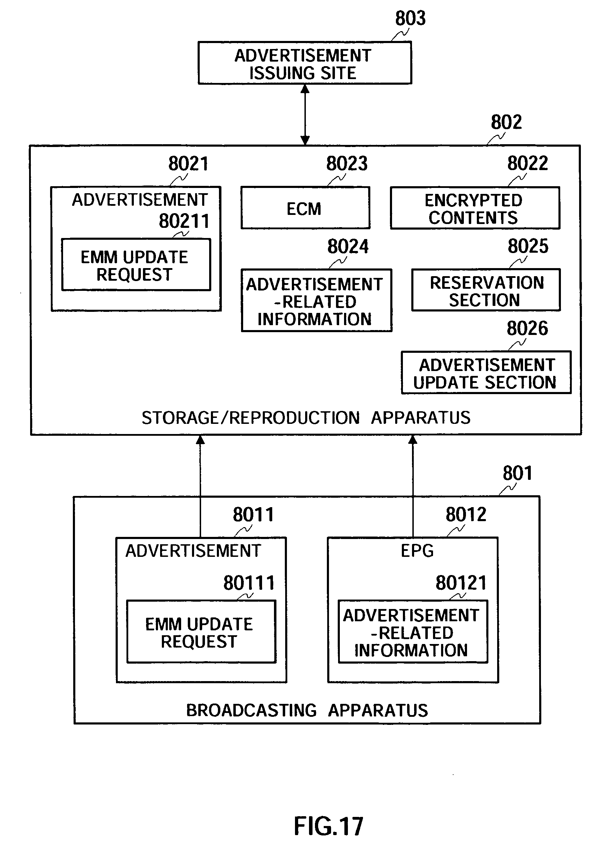

As shown in FIG. 17, in this apparatus, broadcasting apparatus 801 broadcasts advertisement 8011 including EMM update request 80111 and EPG 8012 including advertisement-related information 80121, and a storage/reproduction apparatus 802 stores advertisement 8021 stored in the past, encrypted contents 8022, ECM 8023 and advertisement-related information 8024. Furthermore, storage/reproduction apparatus 802 is provided with reservation section 8025 that reserves viewing of contents 8022 stored in the past or contents delivered with media such as DVD and advertisement update section 8026 that updates stored advertisement 8021 and advertisement-related information 8024. Advertisement update section 8026 acquires the advertisement and advertisement-related information to be updated from broadcasting apparatus 801 or advertisement issuing site 803.

The operation of this viewing control apparatus will be explained. First, the viewer reserves viewing of contents stored in the past or contents delivered with media such as DVD by reservation section 8025.

Next, advertisement update section 8026 references expiration date information from stored advertisement-related information 8024 of contents, viewing of which is reserved, references EPG 8012 broadcasted from broadcasting apparatus 801 when the time from which the viewing is reserved to start is after the expiration date, makes a reservation so as to store an advertisement necessary to view target contents, receives the advertisement 8011 and advertisement-related information 80121 to be broadcasted at the reserved time and updates advertisement 8021 and advertisement-related information 8024.

Furthermore, when the latest advertisement 8011 and advertisement-related information 80121 are not broadcasted by the time from which viewing of the contents is reserved to start, advertisement update section 8026 requests advertisement 8011 and advertisement-related information 80121 from advertisement issuing site 803 via a network, acquires them and updates advertisement 8021 and advertisement-related information 8024.

This storage/reproduction apparatus 802 functions as reproduction/broadcasting apparatus 101 in the first embodiment (FIG. 1).

Note that EPG 8012 may be related to a content broadcasting schedule or advertisement broadcasting schedule.

In this way, when viewing contents stored in the past or contents delivered with media such as DVD, this viewing control apparatus can acquire the latest advertisement necessary to view the contents before the viewing.

### (Ninth embodiment)

A ninth embodiment of the present invention will explain a viewing control apparatus capable of performing viewing control under the condition that a viewer should view an advertisement when viewing copied contents.

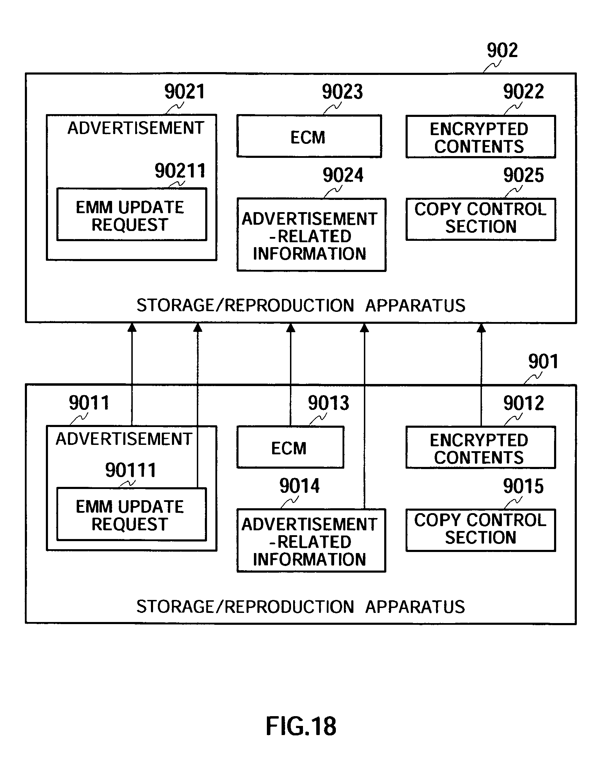

As shown in FIG. 18, in this apparatus, storage/reproduction apparatuses 901 and 902 that store and reproduce contents are provided with copy control sections 9015 and 9025 that control copying of contents, and when contents are copied from storage/reproduction apparatus 901 to storage/reproduction apparatus 902, advertisement 9011 including EMM update request 90111, advertisement-related information 9014, encrypted contents 9012 and ECM 9013 stored in storage/ reproduction apparatus 901 which is the copy source are copied to storage/reproduction apparatus 902 which is the copy destination and stored as advertisement 9021 including EMM update request 90211, advertisement-related information 9024, encrypted contents 9022 and ECM 9023.

The operation of this viewing control apparatus will be explained. First, when contents are copied, copy control section 9025 requests copy control section 9015 to make a copy of contents or copy control section 9015 instructs copy control section 9025 to make a copy of the contents.

Next, copy control section 9015 sends advertisement 9011 of the corresponding contents, encrypted contents 9012, ECM 9013 and advertisement-related information 9014 to storage/reproduction apparatus 902.

Next, copy control section 9025 stores the received information as advertisement 9021, encrypted contents 9022, ECM 9023 and advertisement-related information 9024 respectively.

This storage/reproduction apparatus 902 functions as reproduction/broadcasting apparatus 101 in the first embodiment (FIG. 1) .

In this way, when contents are copied, this viewing control apparatus also copies information necessary for viewing control, and therefore when the copied contents are viewed, it is possible to execute viewing control which allows viewing of contents on condition of viewing an advertisement as in the case of the original contents.

### (Tenth embodiment)

A tenth embodiment of the present invention will explain a viewing control apparatus that collectively controls viewing control information (EMM update request, advertisement-related information) on contents making up a group.

Examples of the contents making up a group include a series program and contents included in the same genre. When contents of the same group are viewed, an advertiser shows the same or related advertisement and thereby expects improvement of advertising effects.

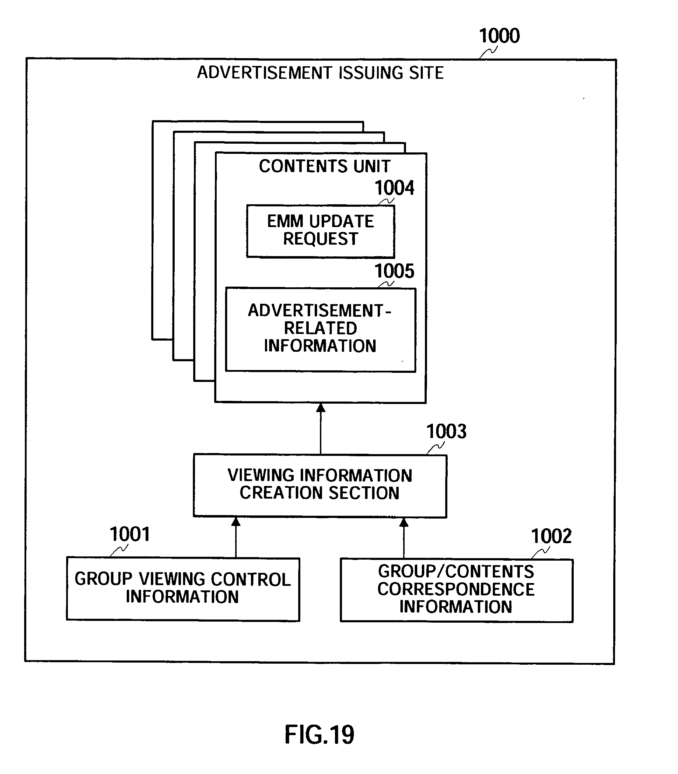

As shown in FIG. 19, in this apparatus, advertisement issuing site 1000 is provided with group viewing control information 1001 including advertisement-related information related to an advertisement necessary to view contents for groups and EMM update request, group/contents correspondence information 1002 which is information about contents belonging to the group and viewing information creation section 1003 that creates EMM update request 1004 and advertisement-related information 1005 necessary for respective contents from information.

The operation of this viewing control apparatus will be explained. First, viewing information creation section 1003 identifies contents belonging to the same group from group/contents correspondence information 1002 and creates EMM update request 1004 and advertisement-related information 1005 necessary for the respective contents based on the group viewing control information 1001.

EMM update request 1004 and advertisement-related information 1005 set for the respective contents are sent to the broadcasting apparatus in the seventh embodiment (FIG. 16) or the eighth embodiment (FIG. 17), where an advertisement including an EMM update request and EPG including advertisement-related information is created.

In this way, this viewing control apparatus eliminates the necessity for carrying out management of contents viewing control for respective contents and it is possible to manage viewing control over a large amount of contents.

### (Eleventh embodiment)

An eleventh embodiment of the present invention will explain a viewing control apparatus that collects a viewing history of an advertisement.

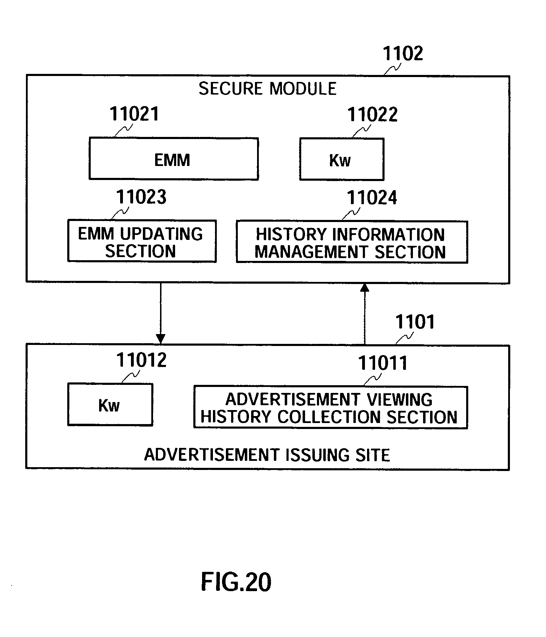

As shown in FIG. 20, in this apparatus, secure module 1102 is provided with history information management section 11024 that stores an advertisement viewing history and reports it to advertisement issuing site 1101 in addition to EMM 11021, key Kw 11022 and EMM updating section 11023 and advertisement issuing site 1101 is provided with advertisement viewing history collection section 11011 that stores key Kw 11012 used to decrypt received viewing history information or encrypt a response thereto, receives the advertisement viewing history and returns a response.

History information management section 11024 stores information about viewed advertisement, encrypts the number of times each advertisement is viewed using Kw 11022 and reports it to each advertisement issuing site 1101 when the storage area of the advertisement viewing history information within the secure module becomes full or at predetermined time intervals. Furthermore, when it is not possible to report the advertisement viewing history information within a report period, viewing of contents through viewing of subsequent advertisements will be disabled assuming that some illegal manipulation has been conducted.

The operation of this viewing control apparatus will be explained. First, history information management section 11024 of secure module 1102 stores viewing history of an advertisement, accumulates information of viewed advertisement, sets the operation of EMM updating section 11023 disabled for predetermined intervals or when the storage area of the advertisement viewing history information within the secure module becomes full before the end of that period, encrypts the number of times each advertisement is viewed using key Kw 11022 and sends it to advertisement issuing site 1101.

Next, advertisement viewing history collection section 11011 of advertisement issuing site 1101 decrypts the number of times the received advertisement is viewed using key Kw 11012. When this report is proven to be legitimate, operation of EMM updating section 11023 is enabled and a response for instructing deletion of reported advertisement viewing history information is encrypted using key Kw 11012 and sent to the secure module 1102. Furthermore, advertisement issuing site 1101 collects an advertisement fee from an advertiser based on the collected number of times the advertisement is viewed.

Secure module 1102 that has received a response from advertisement issuing site 1101 decrypts it using key Kw 11021 and carries out processing according to the instruction.

In this way, this viewing control apparatus can keep track of a viewing situation of an advertisement without any falsity. Furthermore, when the advertisement viewing history information is not reported, it is possible to prevent viewing of contents.

### (Twelfth embodiment)

A twelfth embodiment of the present invention will explain a viewing control apparatus that collects an advertisement viewing history efficiently.

This apparatus collects an advertisement viewing history to be sampled and decides a viewing situation of other advertisements.

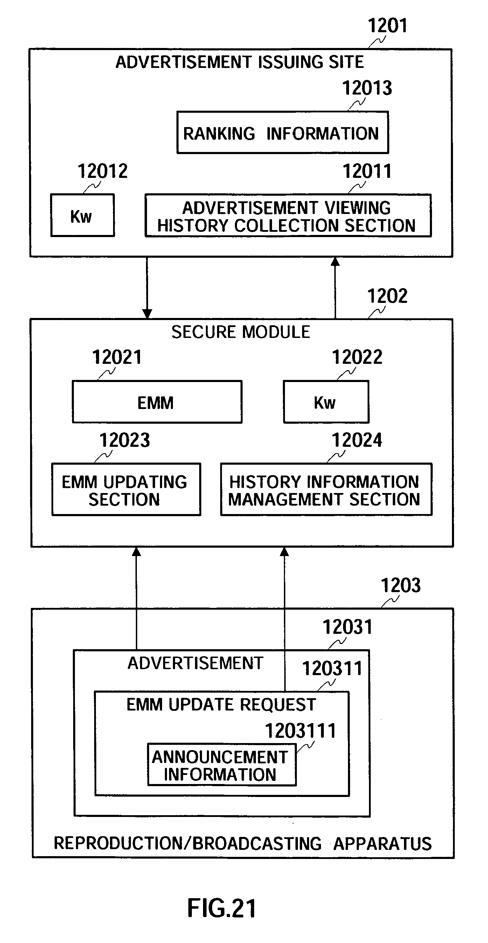

As shown in FIG. 21, in this apparatus, EMM update request 120311 of an advertisement 12031 output by reproduction/broadcasting apparatus 1203 includes announcement information 1203111 indicating whether or not the advertisement viewing history information should be reported to advertisement issuing site 1201. Announcement information 1203111 of advertisements is set by advertisement issuing site 1201. History information management section 12024 of secure module 1202 reports only a viewing history of an advertisement accompanied by announcement information 1203111 "to be reported" to advertisement issuing site 1201. Advertisement issuing site 1201 stores favorable reception ranking information 12013 of various advertisements collected using other methods, references this ranking information 12013 and decides the viewing situations of other advertisements from the collected advertisement viewing history information (sampling data).

The operation of this viewing control apparatus will be explained. First, reproduction/broadcasting apparatus 1203 reproduces or broadcasts the advertisement 12031 including EMM update request 120311. Advertisement 12031 is displayed on a display apparatus. EMM update request 120311 includes announcement information 1203111 indicating whether or not viewing information about the advertisement should be reported to advertisement issuing site 1201.

Next, upon reception of EMM update request 120311, EMM updating section 12023 of secure module 1202 decrypts it using key Kw 12022 and sets information that viewing of the contents specified by EMM update request 120311 is allowed until specified expiration date in EMM 12021. In that case, the information about the advertisement viewed together with announcement information 1203111 is stored in history information management section 12024.

Next, history information management section 12024 sends information about the number of times the advertisement accompanied by the announcement information 1203111 "to be reported" is viewed to advertisement issuing site 1201 and advertisement viewing history collection section 12011 of advertisement issuing site 1201 receives this and returns a response to secure module 1202. The operation in this period is the same as the operation in the eleventh embodiment.

Next, advertisement viewing history collection section 12011, based on a viewing count a of a reported advertisement A, calculates a viewing count b of advertisement B which is described in ranking information yet a viewing count of which is not reported through a calculation of proportion between the ranking and viewing count a of advertisement A and the ranking and viewing count b of advertisement B.

In this way, this viewing control apparatus can efficiently collect information about an advertisement viewing history.

### (Thirteenth embodiment)

A thirteenth embodiment of the present invention will explain a viewing control apparatus that allows, when broadcast contents are viewed in real time, a viewer who starts to view the contents in the middle of broadcasting to view up to the end of the contents.

A viewer, who starts to view a live broadcast program from some midpoint thereof, naturally, does not see an advertisement broadcasted at the beginning of the program. In this case, it is unfair to prevent the viewer from viewing the program for the reason that the viewer does not view the advertisement. This viewing control apparatus will relieve such a case.

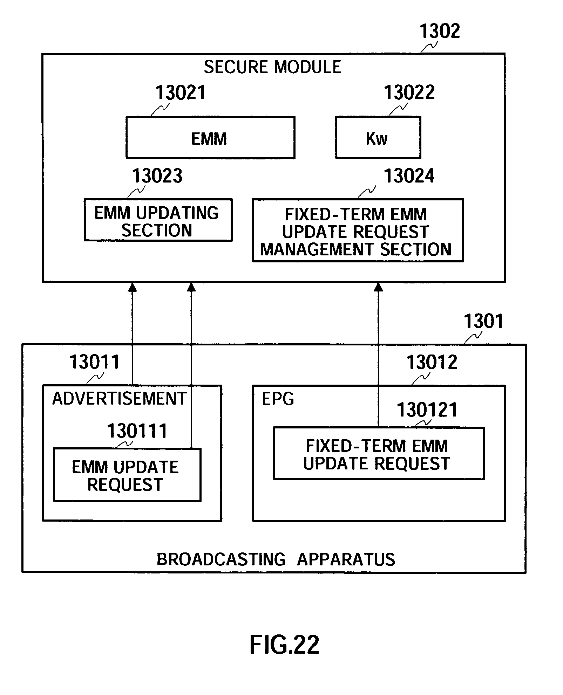

As shown in FIG. 22, in this apparatus, broadcasting apparatus 1301 broadcasts an advertisement 13011 including an EMM update request 130111 and an EPG 13012 including an fixed-term EMM update request 130121 obtained by encrypting real broadcasting times of respective contents and advertisement broadcasting time using key Kw 13022. In addition to EMM 13021, key Kw 13022 and EMM updating section 13023, a secure module 1302 is provided with fixed-term EMM update request management section 13024 that receives fixed-term EMM update request 130121, decrypts it using key Kw 13022 and sets information that viewing of the contents is allowed during a real broadcasting time described in the fixed-term EMM update request 130121 in EMM 13021.

The operation of this viewing control apparatus will be explained. The broadcasting apparatus 1301 broadcasts the EPG 13012 including the fixed-term EMM update request 130121 together with encrypted contents and ECM and also broadcasts an advertisement 13011 including EMM update request 130111 at an insertion point of an advertisement.

When this broadcasting is viewed at some midpoint thereof, fixed-term EMM update request management section 13024 of secure module 1302 receives EPG 13012, decrypts fixed-term EMM update request 130121 therein using key Kw 13022 and sets information that viewing of the contents described in fixed-term EMM update request 130121 is allowed during a real broadcasting time in EMM 13021. As a result, viewing of the contents is allowed until the real broadcasting time of the contents ends.

Next, when advertisement 13011 inserted at some midpoint of the program is viewed and EMM updating section 13023 receives EMM update request 130111, EMM updating section 13023 decrypts it using key Kw 13022 and sets information that viewing of the contents described in EMM update request 130111 is allowed until the expiration date described in EMM update request 130111 in EMM 13021. At this time, when fixed-term EMM update request management section 13024 has already set a contents viewing time longer than the expiration date in EMM 13021, the setting based on EMM update request 130111 is not performed.

In this way, when this broadcasting is viewed at some midpoint, this viewing control apparatus allows the contents to be viewed up to the end. However, when broadcast contents are stored, the contents cannot be viewed unless the advertisement is viewed and EMM is updated by an EMM update request.

### (Fourteenth embodiment)

A fourteenth embodiment of the present invention will explain a viewing control apparatus that controls so that a viewer who starts to view this broadcasting at some midpoint thereof views an advertisement inserted at a later time point without skipping.

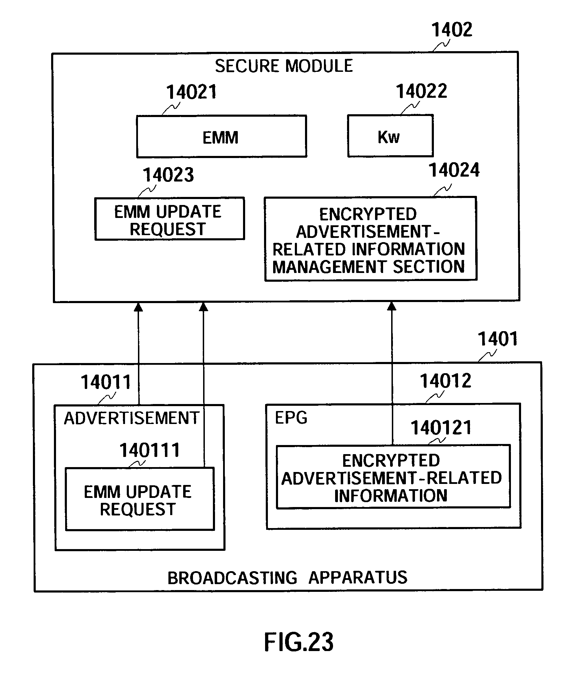

As shown in FIG. 23, in this apparatus, EPG 14012 broadcasted from broadcasting apparatus 1401 includes encrypted advertisement-related information 140121 obtained by encrypting a real broadcasting time of contents and broadcasting time of an advertisement using a key Kw 14022, and secure module 1402 is provided with encrypted advertisement-related information management section 14024 that receives encrypted advertisement-related information 140121, decrypts it using key Kw 14022 and sets information that viewing of contents described in encrypted advertisement-related information 140121 is allowed from a current time until the next advertisement is broadcasted in EMM 14021. The rest of the configuration is the same as the thirteenth embodiment (FIG. 22).

The operation of this viewing control apparatus will be explained. Broadcasting apparatus 1401 broadcasts EPG 14012 including encrypted advertisement-related information 140121 together with the encrypted contents and ECM and also broadcasts advertisement 14011 including EMM update request 140111 at an advertisement insertion point.

When this broadcasting is viewed at some midpoint thereof, the encrypted advertisement-related information management section 14024 of secure module 1402 receives encrypted advertisement-related information 140121, decrypts it using key Kw 14022 and sets information that viewing of contents described in encrypted advertisement-related information 140121 is allowed from a current time until the next advertisement is broadcasted in EMM 14021. Note that once a viewing time for the contents is set in EMM 14021, no updating is performed.

Next, when advertisement 14011 inserted at some midpoint of the program is viewed and EMM updating section 14023 receives EMM update request 140111, EMM updating section 14023 decrypts it using key Kw 14022 and sets information that viewing of the contents described in EMM update request 140111 is allowed until an expiration date described in EMM update request 140111 in EMM 14021.

In this way, when this broadcasting is viewed at some midpoint thereof, this viewing control apparatus makes it possible to view the contents until the next advertisement is broadcasted and after that, unless the advertisement is viewed, it is not possible to view the contents. Therefore, it is possible to view contents even when viewing starts at some midpoint of this broadcasting and let the viewer continue to view the broadcasting once the viewing is started without skipping the advertisement.

### (Fifteenth embodiment)

A fifteenth embodiment of the present invention will explain a viewing control apparatus that applies a scheme of allowing viewing of contents under the condition of viewing an advertisement to contents encrypted using one key.

Encrypting contents using one key is widely practiced for digital copyright management (DRM) and many contents sold on the Internet are encrypted under this scheme.

The viewing control apparatus of this embodiment allows the viewer to view contents encrypted using one key if the viewer views an advertisement and thereby provides an advertiser with an effective place for the advertisement and gives the user an opportunity to view contents free of charge.

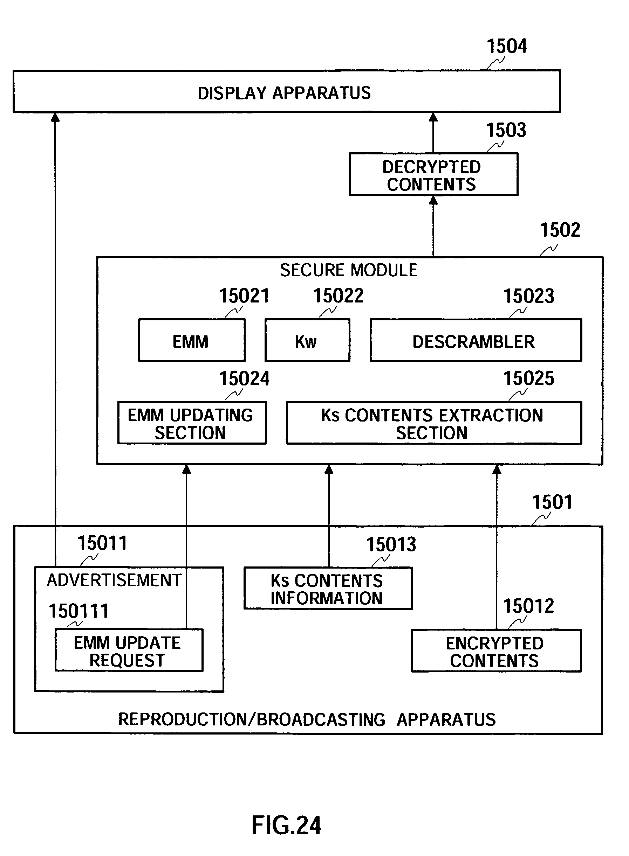

As shown in FIG. 24, this apparatus is provided with reproduction/broadcasting apparatus 1501 that reproduces or broadcasts encrypted contents, secure module 1502 that decrypts contents and display apparatus 1504 that displays advertisements and contents.

Reproduction/broadcasting apparatus 1501 outputs encrypted contents 15012 encrypted using one key (Ks Contents), Ks contents information 15013 which is a contents identification number and information about key Ks Contents used to decrypt contents encrypted using key Kw 15022 and advertisement 15011 necessary to view contents. Advertisement 15011 includes EMM update request 150111 describing specific information about contents and expiration date until which viewing is allowed and EMM update request 150111 is encrypted using key Kw 15022.

This advertisement 15011, Ks Contents information 15013 and encrypted contents 15012 are recorded as one piece of data in a recording medium such as DVD and reproduction/broadcasting apparatus 1501 reproduces this recording medium, outputs advertisement 15011, Ks Contents information 15013 and encrypted contents 15012 or sends out the reproduced information over a network.

Secure module 1502 stores EMM 15021 that defines a contents viewing condition and key Kw 15022 that decrypts EMM update request 150111 and Ks Contents information 15013 and is provided with EMM updating section 15024 that decrypts EMM update request 150111 using key Kw 15022 and sets information that viewing of contents described in EMM update request 150111 is allowed until an expiration date described in EMM update request 150111 in EMM 15021, Ks Contents extraction section 15025 that decrypts Ks Contents information 15013 using key Kw 15022 and extracts key Ks Contents and descrambler 15023 that decrypts encrypted contents 15012 using key Ks Contents extracted by Ks Contents extraction section 15025 and outputs decrypted contents 1503. Note that, since encrypted contents 15012 are encrypted using one key Ks Contents, leakage of key causes a considerable damage. For this reason, this apparatus places the descrambler 15023 in a highly confidential secure module 1502.

Furthermore, display apparatus 1504 displays advertisement 15011 output from reproduction/broadcasting apparatus 1501 and decrypted contents 1503 output from secure module 1502.

The operation of this viewing control apparatus will be explained. First, reproduction/broadcasting apparatus 1501 reproduces or broadcasts advertisement 15011 including EMM update request 150111, encrypted contents 15012 and Ks Contents information 15013. Advertisement 15011 is displayed on display apparatus 1504.

EMM 15021 in secure module 1502 is initially set to be unable to view any contents. Upon reception of EMM update request 150111, EMM updating section 15024 decrypts it using key Kw 15022 and sets information that viewing of the contents described in EMM update request 150111 is allowed until the expiration date described in EMM update request 150111 in EMM 15021.

Next, Ks Contents extraction section 15025 decrypts Ks Contents information 15013 using key Kw 15022 and extracts key Ks Contents.

Next, descrambler 15023 receives encrypted contents 15012, compares the expiration date until which viewing of the contents is allowed set in EMM 15021 with a current time, decrypts encrypted contents 15012 using key Ks Contents when viewing is allowed and sends out decrypted contents 1503. Display apparatus 1504 displays decrypted contents 1503.

In this way, this viewing control apparatus can realize viewing control that allows contents delivered on a network and encrypted using one key to be viewed on condition of viewing a latest advertisement.

### (Sixteenth embodiment)

A sixteenth embodiment of the present invention will explain a viewing control apparatus that can safely send and receive a decryption key for contents encrypted using one key.

Here, this embodiment assumes a mode in which an advertisement issuing site delivers contents to a user who has viewed a latest advertisement on networks and allows the user to safely acquire a contents decryption key from the advertisement issuing site at this time.

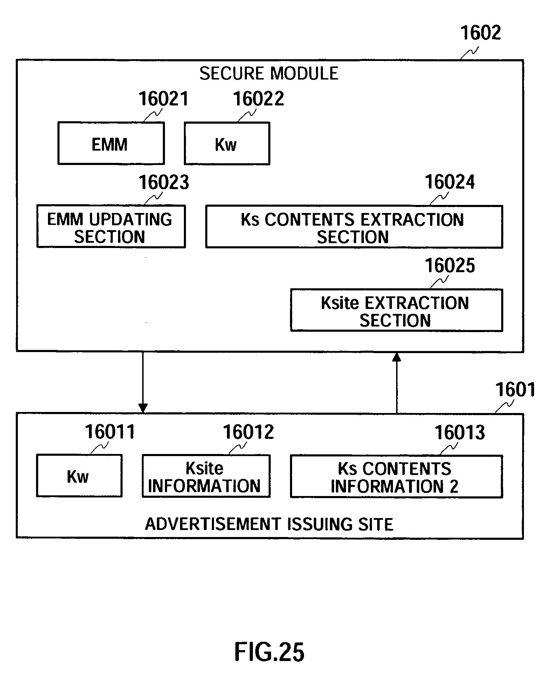

As shown in FIG. 25, in this apparatus, advertisement issuing site 1601 that issues key Ks Contents for viewing contents stores key Kw 16011 for encrypting key Ks ite for advertisement issuing sites, generates Ks ite information 16012 by encrypting key Ks ite using key Kw 16011, encrypts key Ks Contents for viewing contents using key Ks ite and generates Ks Contents information 2 (16013).

On the other hand, in addition to EMM 16021, key Kw 16022 and EMM updating section 16023, secure module 1602 is provided with Ks ite extraction section 16025 that decrypts Ks ite information 16012 using key Kw 16022 and extracts key Ks ite and Ks Contents extraction section 16024 that decrypts Ks Contents information 2 (16013) using key Ks ite extracted by Ks ite extraction section 16025 and extracts key Ks Contents.

The operation of this viewing control apparatus will be explained. First, Ks ite extraction section 16025 of secure module 1602 acquires Ks ite information 16012 from advertisement issuing site 1601, decrypts it using key Kw 16022 and extracts key Ks ite.

Next, Ks Contents extraction section 16024 of secure module 1602 acquires Ks Contents information 2 (16013) of contents to be viewed from advertisement issuing site 1601, decrypts it using key Ks ite and extracts key Ks Contents.

In this way, this viewing control apparatus can safely receive and send a contents key encrypted using one key on networks. The mode of performing viewing control using this extracted key Ks Contents is the same as that in the fifteenth embodiment.

### (Seventeenth embodiment)

A seventeenth embodiment of the present invention will explain a viewing control apparatus that is capable of performing smoothly viewing control even when randomly viewing stored contents by pausing the contents or rewinding part thereof.

Here, the insertion points of an advertisement are supposed to be set every 30 minutes, an advertisement is inserted at the beginning of contents, 30 minutes after the beginning, 1 hour after the beginning and 1 hour and half after the beginning. Furthermore, an expiration date of contents viewing is also supposed to be set to 30 minutes in an EMM update request of the advertisement.

In this case, it is possible to view contents until the time at which the next advertisement is inserted by viewing an advertisement, and therefore it is possible to view up to the end of the contents if the advertisement and contents are reproduced sequentially at a normal speed from the advertisement at the beginning without any problem.

However, if a pause or slow replay is performed during reproduction of the contents, the next advertisement is not reproduced and viewing of the contents is suspended even after the expiration date of contents viewing is past.

The viewing control apparatus in this embodiment can avoid such a situation.

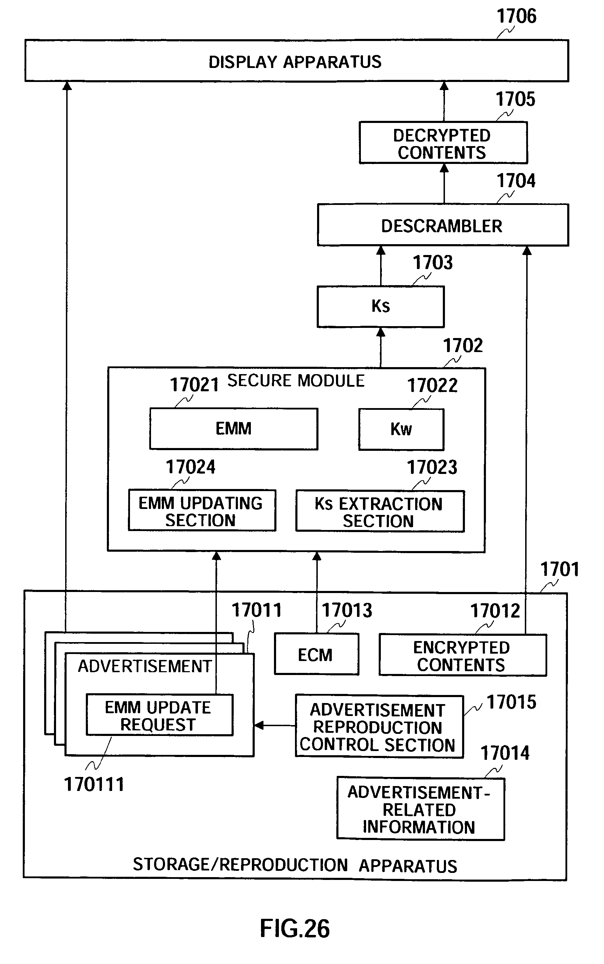

As shown in FIG. 26, in this apparatus, in addition to encrypted contents 17012, ECM 17013, advertisement-related information 17014 (see the seventh embodiment), advertisement 17011 including EMM update request 170111 that is inserted at each insertion point, storage/reproduction apparatus 1701 is provided with advertisement reproduction control section 17015 that controls reproduction of advertisements in order of the description in advertisement-related information 17014 when contents are reproduced. The rest of the configuration is the same as that in the first embodiment (FIG. 1).

The operation of this viewing control apparatus will be explained. First, when reproducing contents, storage/reproduction apparatus 1701 reproduces advertisement 17011 (first advertisement 17011 described in advertisement-related information 17014) including EMM update request 170111 and encrypted contents 17012. At that time, ECM 17013 synchronized with encrypted contents 17012 is also reproduced. Advertisement 17011 is displayed on display apparatus 1706.

The next advertisement is not reproduced even when the time during which viewing is allowed and secured by the reproduced advertisement is past (such a state occurs when contents are reproduced at random), advertisement reproduction control section 17015 stops the reproduction of encrypted contents 17012 and ECM 17013, reproduces next advertisement 17011 described in the advertisement-related information 17014 and then restarts the reproduction of encrypted contents 17012 and ECM 17013.

The operation of secure module 1702 is the same as that of the first embodiment. Under the control of advertisement reproduction control section 17015, advertisement 17011 is reproduced according to a schedule described in advertisement-related information 17014, and therefore even when contents are reproduced randomly, viewing of the contents continues without any interruption.

In this way, this viewing control apparatus can realize viewing control without any interruption of viewing of contents even when contents are viewed randomly.

### (Eighteenth embodiment)

An eighteenth embodiment of the present invention will explain a viewing control apparatus that performs viewing control so that a plurality of advertisements assigned to contents are viewed impartially even when contents are viewed randomly.

When contents are viewed randomly, if a plurality of advertisements assigned to the contents are sequentially reproduced according to a schedule described in advertisement-related information, a high-numbered advertisement in order of viewing has fewer opportunities to be reproduced than a low-numbered advertisement. Returning to the example shown in the seventeenth embodiment, the probability that an advertisement to be inserted one hour and a half after the beginning may be reproduced is lower than the probability that an advertisement to be inserted after 30 minutes may be reproduced.

In order to eliminate such unfairness, the viewing control apparatus of this embodiment is designed to reproduce an advertisement to be inserted immediately before the location of contents to be reproduced when the time at which the advertisement is reproduced comes while contents are being reproduced randomly.

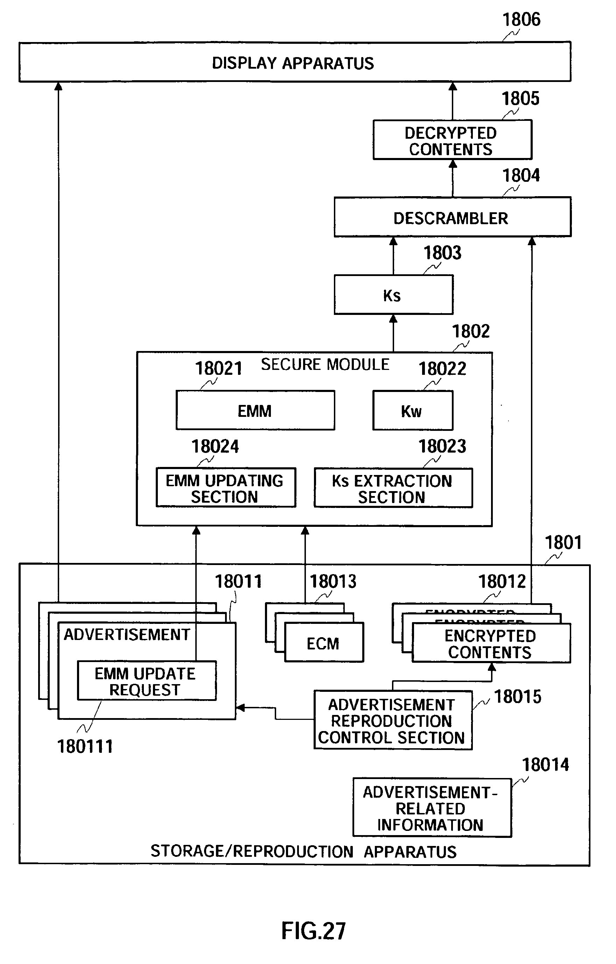

As shown in FIG. 27, in this apparatus, storage/reproduction apparatus 1801 is provided with encrypted contents 18012 obtained by dividing one content into units in which an advertisement is inserted, ECM 18013 divided in accordance with the respective encrypted contents 18012, a plurality of advertisements 18011 including EMM update request 180111 and inserted at respective insertion points, advertisement-related information 18014 that includes information about an advertisement list (including the correspondence between points at which advertisements are inserted in contents and the advertisements to be viewed at those points) and advertisement reproduction control section 18015 that references advertisement-related information 18014 when advertisement 18011 is reproduced, selects advertisement 18011 to be reproduced immediately before the encrypted contents 18012 to be reproduced and controls the reproduction of the advertisement. The rest of the configuration is the same as that of the first embodiment (FIG. 1).

The operation of this viewing control apparatus will be explained. First, when reproducing contents, storage/reproduction apparatus 1801 reproduces advertisement 18011 including EMM update request 180111 (advertisement 18011 selected by the advertisement reproduction control section 18015 as one to be reproduced immediately before the encrypted contents 18012 to be reproduced with reference to advertisement-related information 18014) and encrypted contents 18012. At that time, ECM 18013 synchronized with the encrypted contents 18012 is also reproduced. Advertisement 18011 is displayed on display apparatus 1806.

Note that when the next advertisement is not reproduced even when the time secured by the reproduced advertisement and during which viewing is allowed is past (such a situation occurs when contents are reproduced at random), advertisement reproduction control section 18015 stops the reproduction of encrypted contents 18012 and ECM 18013, references advertisement-related information 18014, selects advertisement 18011 to be reproduced immediately before the encrypted contents 18012 to be reproduced, reproduces advertisement 18011 thereof and then restarts the reproduction of encrypted contents 18012 and ECM 18013.

The operation of the secure module 1802 is the same as that of the first embodiment.

Even when contents are reproduced at random, this apparatus reproduces advertisement 18011 under the control of advertisement reproduction control section 18015 so as not to interrupt viewing of contents. Since the advertisement reproduced at this time is supposed to be inserted immediately before encrypted contents 18012 to be reproduced, there will be no difference in the number of opportunities for reproduction associated with the order in which advertisements are inserted.

In this way, even when contents to which a plurality of advertisements are assigned are viewed at random, this viewing control apparatus allows advertisements to be viewed impartially.

Note that if information stored in the reproduction apparatus of each embodiment is stored in a recording medium such as DVD, it is possible to perform viewing control of contents on condition of viewing an advertisement by reproducing the DVD. For example, by recording encrypted contents, a key to decrypt the contents, advertisement and information about an expiration date until which viewing of the contents is allowed when the advertisement is reproduced and viewed in a recording medium or by recording the advertisement-related information indicating the location of the latest advertisement to be acquired when the expiration date is past, the latest advertisement is viewed every time contents are reproduced. For this reason, this recording medium can serve as new advertisement means.

As is clear from the above described explanations, the foregoing viewing control apparatuses are capable of performing viewing control of contents so that contents can be viewed when an advertisement is viewed. For this reason, the viewer can view contents free of charge and the viewer views the advertisement with certainty. Furthermore, since an expiration date is set for viewing of contents which is allowed by viewing an advertisement, it is necessary to view the latest advertisement so that the time points at which contents are viewed are included within the expiration date. As a result, viewing of the advertisement is conducted in consonance with the expectation of the advertiser. Furthermore, the contents producer can obtain an advertisement fee targeted at contents produced in the past.

Furthermore, it is possible to perform viewing control so as not to allow the viewer to view contents unless the viewer views the advertisement from beginning to end and ensure the advertisement is viewed.

As described above, an aspect of the viewing control apparatus of the present invention is a viewing control apparatus constructed so as to store contents identification information and viewing condition information indicating a viewing expiration date of the contents in a processing module, update, when an advertisement associated with viewing condition update information for updating the viewing condition information is reproduced, the viewing condition information stored in the processing module through an updating section based on the viewing condition update information and control reproduction of the contents based on the viewing condition information.

This configuration allows the viewer to view the contents free of charge and thereby ensures that the viewer sees the advertisement. Furthermore, since an expiration date is set for viewing of contents, which is allowed by viewing an advertisement, a latest advertisement needs to be viewed so that the viewing time point of the contents is included within the expiration date. As a result, the advertisement is viewed as the advertisers expect. Furthermore, the contents producer can earn an advertisement fee from the contents produced in the past.

Furthermore, the processing module is constructed of a secure module.

This configuration allows the viewing condition to be stored or updated securely.

Furthermore, the expiration date of the contents is specified with an absolute time or relative time.

This configuration allows the expiration date of the contents to be specified with an absolute time or relative time.

Furthermore, an expiration date of the contents indicated with an absolute time is generated based on the expiration date of the contents indicated with a relative time using an arbitrary time point between an advertisement viewing start time and advertisement viewing end time or a time at which the advertisement is acquired as a reference time.

This configuration allows specification with a relative time to be converted to specification with an absolute time.

Furthermore, the viewing condition update information is configured to include advertisement-related information indicating an expiration date of an associated advertisement and a source of a latest advertisement to be acquired at a time at which the expiration date is past.

This configuration allows the latest advertisement information to be acquired and delivered.

Furthermore, the contents or the advertisement are acquired via broadcasting, communication or a recording medium.

This configuration allows the contents or advertisement to be acquired via broadcasting, communication or a recording medium.

Furthermore, the contents or the advertisement are configured to be stored in advance.

This configuration allows the contents or the advertisement to be stored in advance and reproduced.

Furthermore, the contents, the viewing condition update information or the viewing condition information is encrypted.

This configuration allows the contents, the viewing condition update information or the viewing condition information to be saved securely.

Furthermore, it is configured that a first key encrypted using a common key is output to a processing module when reproduction of the advertisement is started and the viewing condition update information encrypted using the first key is output to the processing module when the reproduction of the advertisement is completed and the processing module decrypts the first key using the common key and decrypts the viewing condition update information using the first key to update the viewing condition information.

This configuration provides viewing control so that contents cannot be viewed without viewing an advertisement from beginning to end and ensures the advertisement is viewed.

Furthermore, it is configured that when a lapse of time after the first key is received by the processing module until the viewing condition update information is received is different from the original reproduction display time of the advertisement, the viewing condition information is not updated.

This configuration allows the time interval between the times at which the start and end of the advertisement are viewed to be measured, and can thereby prevent fast forwarding or the like of the advertisement.

Furthermore, it is configured that the first key encrypted using the common key is output to the processing module when reproduction of the advertisement is started, and from then on, a new key is encrypted using key sent immediately before and output to the processing module every time the reproduction of the advertisement advances by a predetermined amount and the viewing condition update information encrypted using key sent immediately before is output to the processing module when the reproduction of the advertisement is completed, the processing module decrypts and reproduces key sent sequentially and decrypts the viewing condition update information using key sent before to update the viewing condition information.

Because of this configuration, it is not possible to acquire a key for viewing contents unless all of a plurality of points within the advertisement are viewed without fast forwarding or the like. This ensures that fast forwarding or the like of the advertisement is prevented and ensures that the advertisement is viewed.

Furthermore, when a lapse of time after each key is received by the processing module until the next key is received and a lapse of time after the last key is received until the viewing condition update information is received are different from the time required to advance the reproduction of the advertisement by a predetermined amount, the viewing condition information is not updated.

This configuration does not allow key for viewing contents to be obtained unless all of a plurality of points within the advertisement are viewed without fast forwarding or the like. This ensures that fast forwarding or the like of the advertisement is prevented and ensures that the advertisement is viewed.

Furthermore, when the contents are copied, an advertisement which allows the contents to be viewed is copied together.

When the copied contents are viewed, this configuration provides similar viewing control on condition of viewing the advertisement.

Furthermore, the above described configuration provides the viewing control apparatus according to claim 1, wherein the viewing condition information or the viewing information update information is associated with a group of contents.

This configuration allows management of viewing control of contents to be performed by grouping the contents.

Furthermore, the above described configuration provides the viewing control apparatus according to claim 1, wherein when the contents are reproduced, an advertisement which allows viewing of the contents is reproduced before the contents.

According to this configuration, it is possible to reproduce an advertisement which allows viewing of the contents before the contents.

This application is based on Japanese Patent Application No. 2003-174785 filed on June 19, 2003 and Japanese Patent Application No. 2004-177584 filed on June 15, 2004, entire content of which is expressly incorporated by reference herein.

### Industrial Applicability

The viewing control apparatus, viewing control program and secure device according to the present invention can perform contents viewing control so that contents can be viewed when an advertisement is viewed and thereby produce an effect of ensuring that the viewer views the advertisement in order to view the contents free of charge and are suitable for use in a viewing control apparatus, viewing control program and secure device for controlling viewing of broadcasting contents or stored contents.

## Claims

1. A viewing control apparatus that stores contents identification information and viewing condition information indicating a viewing expiration date of the contents in a processing module,
updates, when an advertisement associated with viewing condition update information for updating the viewing condition information is reproduced, the viewing condition information stored in said processing module through an updating section based on the viewing condition update information, and controls reproduction of the contents based on the viewing condition information.

2. The viewing control apparatus according to claim 1, wherein said processing module is a secure module.

3. The viewing control apparatus according to claim 1, wherein the expiration date of the contents is specified with an absolute time or a relative time.

4. The viewing control apparatus according to claim 3, wherein the expiration date of the contents indicated with the absolute time is generated based on the expiration date of the contents indicated with the relative time using an arbitrary time point between an advertisement viewing start time and advertisement viewing end time or a time at which the advertisement is acquired as a reference time.

5. The viewing control apparatus according to claim 1, wherein the viewing condition update information includes an expiration date of an advertisement and a source of a latest advertisement to be acquired at a time at which the expiration date is past.

6. The viewing control apparatus according to claim 1, wherein the contents or the advertisement are acquired via broadcasting, communication or a recording medium.

7. The viewing control apparatus according to claim 1, wherein the contents or the advertisement are stored in advance.

8. The viewing control apparatus according to claim 1, wherein the contents, the viewing condition update information or the viewing condition information is encrypted.

9. The viewing control apparatus according to claim 1, wherein a first key encrypted using a common key is output to a processing module when reproduction of the advertisement is started and the viewing condition update information encrypted using the first key is output to the processing module when the reproduction of the advertisement is completed and the processing module decrypts the first key using the common key and decrypts the viewing condition update information using the first key to update the viewing condition information.

10. The viewing control apparatus according to claim 9, wherein when a lapse of time after the first key is received by the processing module until the viewing condition update information is received is different from the original reproduction display time of the advertisement, the viewing condition information is not updated.

11. The viewing control apparatus according to claim 9, wherein the first key encrypted using the common key is output to the processing module when reproduction of the advertisement is started, and from then on, a new key is encrypted using key sent immediately before and output to the processing module every time the reproduction of the advertisement advances by a predetermined amount, and the viewing condition update information encrypted using key sent immediately before is output to the processing module when the reproduction of the advertisement is completed, the processing module decrypts and reproduces keys sent sequentially and decrypts the viewing condition update information using key sent before to update the viewing condition information.

12. The viewing control apparatus according to claim 11, wherein when a lapse of time after each key is received by the processing module until the next key is received and a lapse of time after the last key is received until the viewing condition update information is received are different from the time required to advance the reproduction of the advertisement by a predetermined amount, the viewing condition information is not updated.

13. The viewing control apparatus according to claim 1, wherein when the contents are copied, an advertisement which allows the contents to be viewed is copied together.

14. The viewing control apparatus according to claim 1, wherein the viewing condition information or the viewing information update information is associated with a group of contents.

15. The viewing control apparatus according to claim 1, wherein when the contents are reproduced, an advertisement which allows viewing of the contents is reproduced before the contents.

16. A viewing control program that causes a computer to function so as to store contents identification information and viewing condition information indicating a viewing expiration date of the contents,
update the viewing condition information stored based on the viewing condition update information when an advertisement associated with viewing condition update information for updating the viewing condition information is reproduced, and
control reproduction of the contents based on the viewing condition information.

17. A secure module that stores encrypted contents to be viewed and contents viewing condition information which specifies an expiration date until which viewing of the encrypted contents is allowed and decrypts and reproduces the encrypted contents based on the expiration date specified by the viewing condition information, wherein, when an advertisement associated with viewing condition update information for updating the expiration date of the encrypted contents specified by the viewing condition information is reproduced, the viewing condition information is updated based on the viewing condition update information and viewing of the encrypted contents specified by the viewing condition update information is allowed.
